(19) Europäisches Patentamt
European Patent Office
Office européen des brevets

(11) EP 1 813 151 A1

(12) # EUROPÄISCHE PATENTANMELDUNG

(43) Veröffentlichungstag:
**01.08.2007 Patentblatt 2007/31**

(51) Int Cl.:
***A01N 43/56*** *(2006.01)*

(21) Anmeldenummer: **06100901.5**

(22) Anmeldetag: **26.01.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **BASF Aktiengesellschaft**
**67063 Ludwigshafen (DE)**

(72) Erfinder:
- **Gewehr, Markus Dr.**
  **56288 Kastellaun (DE)**
- **Stierl, Reinhard Dr.**
  **67251 Freinsheim (DE)**
- **Dietz, Jochen Dr.**
  **68167 Mannheim (DE)**
- **Müller, Bernd Dr.**
  **67277 Frankenthal (DE)**
- **Scherer, Maria**
  **76829 Landau (DE)**
- **Strathmann, Siegfried Dr.**
  **67117 Limburgerhof (DE)**
- **Werner, Frank Dr.**
  **67434 Neustadt (DE)**
- **Vonend, Michael Dr.**
  **67098 Bad Dürkheim (DE)**

(54) **Fungizide Mischungen auf der Basis von 1-Methyl-pyrazol-4-yl-carbonsäureaniliden**

(57) Fungizide Mischungen, enthaltend als aktive Komponenten
1) 1-Methyl-pyrazol-4-ylcarbonsäureanilide I

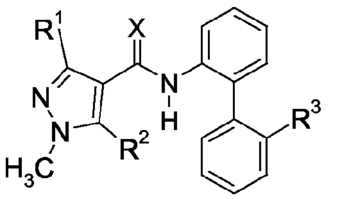

I,

in der X = Sauerstoff oder Schwefel, $R^1$ = Halogen, $C_1$-$C_4$-Alkyl oder $C_1$-$C_4$-Halogenalkyl, $R^2$ = H oder Halogen und $R^3$ = Nitro, Cyano, Halogen, $C_1$-$C_4$-Alkyl, $C_1$-$C_4$-Halogenalkyl, $C_1$-$C_4$-Alkoxy, $C_1$-$C_4$-Halogenalkoxy oder $C_1$-$C_4$-Alkylthio bedeuten
und
2) mindestens einen Wirkstoff II, ausgewählt aus den Wirkstoffgruppen A) bis F):
A) Azole;
B) Strobilurine;
C) Carbonsäureamide;
D) Heterocyclische Verbindungen;
E) Carbamate;
F) Sonstige Fungizide;

in einer synergistisch wirksamen Menge, Verfahren zur Bekämpfung von Schadpilzen mit Mischungen aus einer Verbindung I und mindestens einem Wirkstoff II und die Verwendung einer Verbindung I mit Wirkstoffen II zur Herstellung derartiger Mischungen sowie Mittel, die diese Mischungen enthalten.

EP 1 813 151 A1

## Beschreibung

Die vorliegende Erfindung betrifft fungizide Mischungen, enthaltend als aktive Komponenten

1) 1-Methyl-pyrazol-4-ylcarbonsäureanilide der Formel I

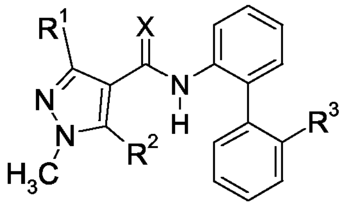

I,

in der die Variablen folgende Bedeutungen haben:

X Sauerstoff oder Schwefel;
$R^1$ Halogen, $C_1$-$C_4$-Alkyl oder $C_1$-$C_4$-Halogenalkyl,
$R^2$ Wasserstoff oder Halogen; und
$R^3$ Nitro, Cyano, Halogen, $C_1$-$C_4$-Alkyl, $C_1$-$C_4$-Halogenalkyl, $C_1$-$C_4$-Alkoxy, $C_1$-$C_4$-Halogenalkoxy oder $C_1$-$C_4$-Alkylthio,

und

2) mindestens einen Wirkstoff II, ausgewählt aus den Wirkstoffgruppen A) bis F):

A) Azole, ausgewählt aus Bitertanol, Bromuconazol, Cyproconazol, Difenoconazol, Diniconazol, Enilconazol, Epoxiconazol, Fluquinconazol, Fenbuconazol, Flusilazol, Flutriafol, Hexaconazol, Imibenconazol, Ipconazol, Metconazol, Myclobutanil, Penconazol, Propiconazol, Prothioconazol, Simeconazol, Triadimefon, Triadimenol, Tebuconazol, Tetraconazol, Triticonazol, Prochloraz, Pefurazoate, Imazalil, Triflumizol, Cyazofamid, Benomyl, Carbendazim, Thiabendazol, Fuberidazol, Ethaboxam, Etridiazol und Hymexazol;

B) Strobilurine, ausgewählt aus Azoxystrobin, Dimoxystrobin, Enestroburin, Fluoxastrobin, Kresoxim-methyl, Methominostrobin, Orysastrobin, Picoxystrobin, Pyraclostrobin, Trifloxystrobin, Enestroburin, (2-Chlor-5-[1-(3-methyl-benzyloxyimino)-ethyl]-benzyl)-carbaminsäuremethylester, (2-Chlor-5-[1-(6-methyl-pyridin-2-ylmethoxyimino)-ethyl]-benzyl)-carbaminsäuremethylester und 2-(ortho-(2,5-Dimethylphenyloxymethylen)phenyl)-3-methoxy-acrylsäuremethylester;

C) Carbonsäureamide, ausgewählt aus Carboxin, Benalaxyl, Boscalid, Fenhexamid, Flutolanil, Furametpyr, Mepronil, Metalaxyl, Mefenoxam, Ofurace, Oxadixyl, Oxycarboxin, Penthiopyrad, Thifluzamid, Tiadinil, 3,4-Dichlor-N-(2-cyanophenyl)-isothiazol-5-carbonsäureamid, Penthiopyrad, Dimethomorph, Flumorph, Flumetover, Fluopicolid (Picobenzamid), Zoxamid, Carpropamid, Diclocymet, Mandipropamid, N-(2-(4-[3-(4-Chlor-phenyl)-prop-2-ynyloxy]-3-methoxy-phenyl)-ethyl)-2-methanesulfonylamino-3-methylbutyramid, N-(2-(4-[3-(4-Chlor-phenyl)-prop-2-ynyloxy]-3-methoxy-phenyl)-ethyl)-2-ethanesulfonylamino-3-methyl-butyramid, 4-Difluormethyl-2-methyl-thiazol-5-carbonsäure-(4'-brom-biphenyl-2-yl)-amid, 4-Difluormethyl-2-methyl-thiazol-5-carbonsäure-(4'-trifluormethyl-biphenyl-2-yl)-amid, 4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid und 3,4-Dichlor-isothiazol-5-carbonsäure-(2-cyano-phenyl)amid;

D) Heterocyclische Verbindungen, ausgewählt aus Fluazinam, Pyrifenox, Bupirimat, Cyprodinil, Fenarimol, Ferimzon, Mepanipyrim, Nuarimol, Pyrimethanil, Triforin, Fenpiclonil, Fludioxonil, Aldimorph, Dodemorph, Fenpropimorph, Tridemorph, Fenpropidin, Iprodion, Procymidon, Vinclozolin, Famoxadon, Fenamidon, Octhilinon, Probenazol, 5-Chlor-7-(4-methylpiperidin-1-yl)-6-(2,4,6-trifluor-phenyl)-[1,2,4]triazolo[1,5-a]pyrimidin, Anilazin, Diclomezin, Pyroquilon, Proquinazid, Tricyclazol, die Verbindung der Formel III (2-Butoxy-6-iodo-3-propyl-chromen-4-on)

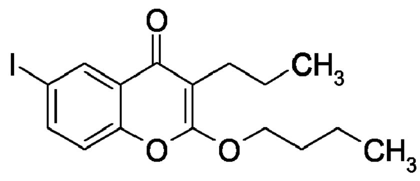

III,

Acibenzolar-S-methyl, Captafol, Captan, Dazomet, Folpet, Fenoxanil, Quinoxyfen und 3-(3-Brom-6-fluor-2-methyl-indol-1-sulfonyl)-[1,2,4]triazol-1-sulfonsäuredimethylamid;

E) Carbamate, ausgewählt aus Mancozeb, Maneb, Metam, Metiram, Ferbam, Propineb, Thiram, Zineb, Ziram, Diethofencarb, Iprovalicarb, Flubenthiavalicarb, Propamocarb, N-(1-(1-(4-cyanophenyl)ethanesulfonyl)-but-2-yl)carbaminsäure-(4-fluorphenyl)ester, 3-(4-Chlor-phenyl)-3-(2-isopropoxycarbonylamino-3-methyl-butyrylamino)-propansäuremethylester und Carbamatoximether der Formel IV

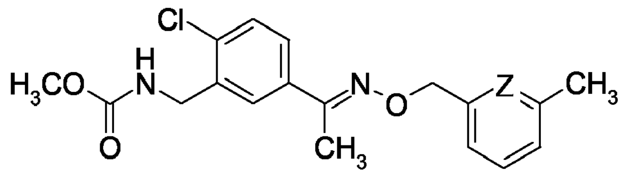

IV,

in der Z für N oder CH steht;

F) Sonstige Fungizide, ausgewählt aus
Guanidin, Dodin, Iminoctadin, Guazatin,
Antibiotika: Kasugamycin, Streptomycin, Polyoxin, Validamycin A, Nitrophenylderivate: Binapacryl, Dinocap, Dinobuton,
Schwefelhaltige Heterocyclylverbindungen : Dithianon, Isoprothiolan, Organometallverbindungen: Fentin Salze wie Fentin-acetat, Organophosphorverbindungen: Edifenphos, Iprobenfos, Fosetyl, Fosetyl-Aluminium, Phosphorige Säure und ihre Salze, Pyrazophos, Tolclofos-methyl,
Organochlorverbindungen: Chlorothalonil, Dichlofluanid, Flusulfamid, Hexachlorbenzol, Phthalid, Pencycuron, Quintozen, Thiophanat-Methyl, Tolylfluanid,
Anorganische Wirkstoffe: Bordeaux Brühe, Kupferacetat, Kupferhydroxid, Kupferoxychlorid, basisches Kupfersulfat, Schwefel,
Sonstige: Cyflufenamid, Cymoxanil, Dimethirimol, Ethirimol, Furalaxyl, Metrafenon und Spiroxamin;

in einer synergistisch wirksamen Menge.

Außerdem betrifft die Erfindung ein Verfahren zur Bekämpfung von Schadpilzen mit Mischungen der Verbindungen I mit mindestens einem der Wirkstoffe II und die Verwendung der Verbindungen I mit Wirkstoffen II zur Herstellung derartiger Mischungen sowie Mittel, die diese Mischungen enthalten.

Die als Komponente 1) voranstehend bezeichneten 1-Methyl-pyrazol-4-ylcarbonsäureanilide der Formel I, deren Herstellung und deren Wirkung gegen Schadpilze sind aus der Literatur bekannt oder auf die dort beschriebene Weise herstellbar (vgl. z.B. EP-A 545099, EP-A 0589301 und WO 99/09013).

In der WO 05/34628 werden Mischungen aus Pyrazol-4-ylcarbonsäureaniliden, die ein anderes Substitutionsmuster am Biphenyl-Rest aufweisen, mit einer Vielzahl von verschiedenen Mischungspartnern beschrieben.

Die beschriebenen Mischungen können jedoch, insbesondere bei niedrigen Aufwandmengen, nur bedingt befriedigen.

Die voranstehend als Komponente 2 genannten Wirkstoffe II, ihre Herstellung und ihre Wirkung gegen Schadpilze sind allgemein bekannt (vgl.: http://www.hclrss.demon.co.uk/index.html); sie sind kommerziell erhältlich.

Benalaxyl, Methyl *N*-(phenylacetyl)-*N*-(2,6-xylyl)-DL-alaninat (DE 29 03 612);
Metalaxyl, Methyl *N*-(methoxyacetyl)-*N*-(2,6-xylyl)-DL-alaninat (GB 15 00 581);
Ofurace, (*RS*)-α-(2-Chlor-*N*-2,6-xylylacetamido)-γ-butyrolacton [CAS RN 58810-48-3];
Oxadixyl, *N*-(2,6-dimethylphenyl)-2-methoxy-*N*-(2-oxo-3-oxazolidinyl)acetamid (GB 20 58 059);
Aldimorph, "4-Alkyl-2,5(oder 2,6)-dimethylmorpholin", enthaltend 65-75% 2,6-Dimethylmorpholin und 25-35% 2,5-Dimethylmorpholin, enthaltend mehr als 85% 4-Dodecyl-2,5(oder 2,6)-Dimethylmorpholin, wobei "alkyl" auch Octyl,

Decyl, Tetradecyl und Hexadecyl mit einem cis/trans Verhältnis von 1:1 einschließt [CAS RN 91315-15-0];
Dodine, 1-Dodecylguanidinium acetate (Plant Dis. Rep. 41, S.1029 (1957));
Dodemorph, 4-Cyclododecyl-2,6-dimethylmorpholin (DE-A 1198125);
Fenpropimorph, (RS)-cis-4-[3-(4-tert-Butylphenyl)-2-methylpropyl]-2,6-dimethylmorpholin (DE-A 27 52 096);
Fenpropidin, (*RS*)-1-[3-(4-*tert*-Butylphenyl)-2-methylpropyl]piperidin (DE-A 27 52 096);
Guazatine, Mischung der Reaktionsprodukte, erhalten aus der Amidierung von technischem Iminodi(octamethylene) diamin, enthaltend verschiedene Guanidine und Polyamine [CAS RN 108173-90-6];
Iminoctadin, 1,1'-Iminodi(octamethylene)diguanidine (Congr. Plant Pathol., 1., S. 27 (1968);
Spiroxamin, (8-Tert-butyl-1,4-dioxaspiro[4.5]dec-2-yl)diethylamin (EP-A 281 842);
Tridemorph, 2,6-Dimethyl-4-tridecylmorpholin (DE-A 11 64 152);
Pyrimethanil, 4,6-Dimethylpyrimidin-2-yl-phenylamin (DD-A 151 404);
Mepanipyrim, (4-Methyl-6-prop-1-inyl-pyrimidin-2-yl)-phenylamin (EP-A 224 339);
Cyprodinil, (4-Cyclopropyl-6-methylpyrimidin-2-yl)phenylamin (EP-A 310 550);
Cycloheximid, 4-{(2*R*)-2-[(1*S*,3*S*,5*S*)-3,5-Dimethyl-2-oxocyclohexyl]-2-hydroxyethyl}piperidin-2,6-dion [CAS RN 66-81-9];
Griseofulvin, 7-Chlor-2',4,6-trimethoxy-6'-methylspiro[benzofuran-2(3*H*),1'-cyclohex-2'-ene]-3,4'-dion [CAS RN 126-07-8];
Kasugamycin, 3-*O*-[2-Amino-4-[(carboxyiminomethyl)amino]-2,3,4,6-tetradeoxy-α-D-*arabino*-hexopyranosyl]-D-*chiro*-inositol [CAS RN 6980-18-3];
Natamycin, (8*E*,14*E*,16*E*,18*E*,20*E*)-(1*R*,3*S*,5*R*,7*R*,12*R*,22*R*,24*S*,25R,26*S*)-22-(3-Amino-3,6-dideoxy-β-D-mannopyranosyloxy)-1,3,26-trihydroxy-12-methyl-10-oxo-6,11,28-trioxatricyclo[22.3.1.$0^{5,7}$]octacosa-8,14,16,18,20-pentaene-25-carbonsäure [CAS RN 7681-93-8];
Polyoxin, 5-(2-Amino-5-*O*-carbamoyl-2-deoxy-L-xylonamido)-1-(5-carboxy-1,2,3,4-tetrahydro-2,4-dioxopyrimidin-1-yl)-1,5-dideoxy-β-D-allofuranuronsäure [CAS RN 22976-86-9];
Streptomycin, 1,1'-{1-L-(1,3,5/2,4,6)-4-[5-Deoxy-2-*O*-(2-deoxy-2-methylamino-α-L-glucopyranosyl)-3-*C*-formyl-α-L-lyxofuranosyloxy]-2,5,6-trihydroxycyclohex-1,3-ylene}diguanidin (J. Am. Chem. Soc. 69, S.1234 (1947));
Bitertanol, β-([1,1'-Biphenyl]-4-yloxy)-α-(1,1-dimethylethyl)-1*H*-1,2,4-triazole-1-ethanol (DE 23 24 020);
Bromuconazol, 1-[[4-Brom-2-(2,4-dichlorphenyl)tetrahydro-2-furanyl]methyl]-1H-1,2,4-triazol (Proc. 1990 Br. Crop. Prot. Conf. - Pests Dis., Bd. 1, S. 459);
Cyproconazol, 2-(4-Chlorphenyl)-3-cyclopropyl-1-[1,2,4]triazol-1-ylbutan-2-ol (US 4 664 696);
Difenoconazol, 1-{2-[2-Chlor-4-(4-chlorphenoxylphenyl]-4-methyl-[1,3]dioxolan-2-ylmethyl}-1H-[1,2,4]triazol (GB-A 2 098 607);
Diniconazol, (β*E*)-β-[(2,4-Dichlorphenyl)methylen]-α-(1,1-dimethylethyl)-1*H*-1,2,4-triazol-1-ethanol (Noyaku Kagaku, 1983, Bd. 8, S. 575);
Enilconazol (Imazalil), 1-[2-(2,4-Dichlorphenyl)-2-(2-propenyloxy)ethyl]-1*H*-imidazol (Fruits 28, S. 545, 1973);
Epoxiconazol, (2*RS*,3*SR*)-1-[3-(2-Chlorphenyl)-2,3-epoxy-2-(4-fluorophenyl)propyl]-1*H* 1,2,4-triazol (EP-A 196 038);
Fenbuconazol, α-[2-(4-Chlorphenyl)ethyl]-α-phenyl-1*H*-1,2,4-triazole-1-propannitril (Proc. 1988 Br. Crop Prot. Conf. - Pests Dis., Bd. 1, S. 33);
Fluquinconazol, 3-(2,4-Dichlorphenyl)-6-fluor-2-[1,2,4]-triazol-1-yl-3H-quinazolin-4-on (Proc. Br. Crop Prot. Conf.-Pests Dis., 5-3, 411 (1992));
Flusilazol, 1-{[Bis-(4-fluorophenyl)methylsilanyl]methyl}-1H-[1,2,4]triazol (Proc. Br. Crop Prot. Conf.-Pests Dis., Bd. 1, S. 413 (1984));
Flutriafol, α-(2-Fluorphenyl)-α-(4-fluorphenyl)-1*H*-1,2,4-triazol-1-ethanol (EP-A 15 756); Hexaconazol, 2-(2,4-Dichlorphenyl)-1-[1,2,4]triazol-1-yl-hexan-2-ol (CAS RN 79983-71-4);
Ipconazol, 2-[(4-Chlorphenyl)methyl]-5-(1-methylethyl)-1-(1*H*-1,2,4-triazol-1-yl-methyl)cyclopentanol (EP-A 267 778),
Metconazol, 5-(4-Chlorbenzyl)-2,2-dimethyl-1-[1,2,4]triazol-1-ylmethylcyclopentanol (GB 857 383);
Myclobutanil, 2-(4-Chlorphenyl)-2-[1,2,4]triazol-1-ylmethyl-pentannitril (CAS RN 88671-89-0);
Penconazol, 1-[2-(2,4-Dichlorphenyl)pentyl]-1H-[1,2,4]triazol (Pesticide Manual, 12. Auflage 2000, S. 712);
Propiconazol, 1-[[2-(2,4-Dichlorphenyl)-4-propyl-1,3-dioxolan-2-yl]methyl]-1*H*-1,2,4-triazol (BE 835 579);
Prochloraz, Imidazol-1-carbonsäure-propyl-[2-(2,4,6-trichlorphenoxy)-ethyl]-amid (US 3 991 071);
Prothioconazol, 2-[2-(1-Chlorcyclopropyl)-3-(2-chlorphenyl)-2-hydroxypropyl]-2,4-dihydro-[1,2,4]triazol-3-thion (WO 96/16048);
Simeconazol, α-(4-Fluorophenyl)-α-[(trimethylsilyl)methyl]-1*H*-1,2,4-triazol-1-ethanol [CAS RN 149508-90-7],
Tebuconazol, 1-(4-Chlorphenyl)-4,4-dimethyl-3-[1,2,4]triazol-1-ylmethyl-pentan-3-ol (EP-A 40 345);
Tetraconazol, 1-[2-(2,4-Dichlorphenyl)-3-(1,1,2,2-tetrafluorethoxy)propyl]-1*H*-1,2,4-triazol (EP-A 234 242);
Triadimefon, 1-(4-Chlorphenoxy)-3,3-dimethyl-1-(1*H*-1,2,4-triazol-1-yl)-2-butanon (BE 793 867);
Triadimenol, β-(4-Chlorphenoxy)-α-(1,1-dimethylethyl)-1*H*-1,2,4-triazol-1-ethanol (DE-A 23 24 010);
Triflumizol, (4-Chlor-2-trifluormethylphenyl)-(2-propoxy-1-[1,2,4]triazol-1-yl-ethyliden)-amin (JP-A 79/119 462);

Triticonazol, (5*E*)-5-[(4-Chlorphenyl)methylen]-2,2-dimethyl-1-(1*H*-1,2,4-triazol-1-ylmethyl)cyclopentanol (FR 26 41 277);
Iprodion, 3-(3,5-Dichlorphenyl)-2,4-dioxo-imidazolidin-1-carbonsäureisopropylamid (GB 13 12 536);
Myclozolin, (*RS*)-3-(3,5-Dichlorophenyl)-5-methoxymethyl-5-methyl-1,3-oxazolidin-2,4-dion [CAS RN 54864-61-8];
Procymidon, *N*-(3,5-Dichlorphenyl)-1,2-dimethylcyclopropan-1,2-dicarboximid (US 3 903 090);
Vinclozolin, 3-(3,5-Dichlorphenyl)-5-methyl-5-vinyl-oxazolidin-2,4-dion (DE-A 22 07 576);
Ferbam, Eisen(3+)dimethyldithiocarbamat (US 1 972 961);
Nabam, Dinatriumethylenbis(dithiocarbamat) (US 2 317 765);
Maneb, Mangan-ethylenbis(dithiocarbamat) (US 2 504 404);
Mancozeb, Mangan-ethylenbis(dithiocarbamat)-polymerkomplex-Zinksalz (GB 996 264);
Metam, Methyldithiocarbaminsäure (US 2 791 605);
Metiram, Zinkammoniat-ethylenbis(dithiocarbamat) (US 3 248 400);
Propineb, Zink Propylenbis(dithiocarbamat) Polymer (BE 611 960);
Polycarbamat, Bis(dimethylcarbamodithioato-KS,KS')[μ-[[1,2-ethanediylbis[carbamodithioato-KS,KS']](2-)]]di[zinc] [CAS RN 64440-88-6];
Thiram, Bis(dimethylthiocarbamoyl)disulfid (DE-A 642 532);
Ziram, Dimethyldithiocarbamat [CAS RN 137-30-4];
Zineb, Zink-ethylenbis(dithiocarbamat) (US 2 457 674);
Anilazin, 4,6-Dichlor-*N*-(2-chlorphenyl)-1,3,5-triazin-2-amin (US 2 720 480);
Benomyl, 2-Acetylaminobenzimidazol-1-carbonsäurebutylamid (US 3 631 176);
Boscalid, 2-chloro-N-(4'-chlorobiphenyl-2-yl)nicotinamide (EP-A 545 099);
Carbendazim, (1 H-Benzimidazol-2-yl)-carbaminsäuremethylester (US 3 657 443);
Carboxin, 5,6-Dihydro-2-methyl-*N*-phenyl-1,4-oxathiin-3-carboxamide (US 3 249 499);
Oxycarboxin, 5,6-Dihydro-2-methyl-1,4-oxathiin-3-carboxanilid 4,4-dioxid (US 3 399 214);
Cyazofamid, 4-chloro-2-cyano-*N,N*-dimethyl-5-(4-methylphenyl)-1*H*-imidazole-1-sulfonamid (CAS RN 120116-88-3];
Dazomet, 3,5-dimethyl-1,3,5-thiadiazinane-2-thione (Bull. Soc. Chim. Fr. Vol. 15, p. 891 (1897));
Diflufenzopyr, 2-{1-[4-(3,5-difluorophenyl)semicarbazono]ethyl}nicotinic acid [CAS RN 109293-97-2];
Dithianon, 5,10-Dioxo-5,10-dihydronaphtho[2,3-b][1,4]dithiin-2,3-dicarbonitril (GB 857 383);
Famoxadon, (*RS*)-3-Anilino-5-methyl-5-(4-phenoxyphenyl)-1,3-oxazolidin-2,4-dion [CAS RN 131807-57-3];
Fenamidon, (S)-1-Anilino-4-methyl-2-methylthio-4-phenylimidazolin-5-on [CAS RN 161326-34-7];
Fenarimol, α-(2-Chlorphenyl)-α-(4-chlorphenyl)-5-pyrimidinemethanol (GB 12 18 623);
Fuberidazole, 2-(2-Furanyl)-1*H*-benzimidazol (DE-A 12 09 799);
Flutolanil, α,α,α-Trifluor-3'-isopropoxy-*o*-toluanilid (JP 1104514);
Furametpyr, 5-Chlor-*N*-(1,3-dihydro-1,1,3-trimethyl-4-isobenzofuranyl)-1,3-dimethyl-1*H*-pyrazol-4-carboxamid [CAS RN 123572-88-3];
Isoprothiolan, diisopropyl 1,3-dithiolan-2-ylidenemalonat (Proc. Insectic. Fungic. Conf. 8. Bd. 2, S. 715 (1975));
Mepronil, 3'-Isopropoxy-*o*-toluanilid (US 3 937 840);
Nuarimol, α-(2-Chlorphenyl)-α-(4-fluorphenyl)-5-pyrimidinemethanol (GB 12 18 623);
Fluopicolid (Picobenzamid), 2,6-Dichlor-N-(3-chlor-5-trifluormethyl-pyridin-2-ylmethyl)-benzamid (WO 99/42447);
Probenazol, 3-Allyloxy-1,2-benzothiazol 1,1-dioxid (Agric. Biol. Chem. 37, S. 737 (1973);
Proquinazid, 6-lod-2-propoxy-3-propylquinazolin-4(3*H*)-on (WO 97/48684);
Pyrifenox, 2',4'-Dichlor-2-(3-pyridyl)acetophenon (*EZ*)-*O*-methyloxim (EP 49 854);
Pyroquilon, 1,2,5,6-tetrahydropyrro)o[3,2,1-*ij*]quinolin-4-on (GB 139 43 373) Quinoxyfen, 5,7-dichlor-4-(4-fluorphenoxy) quinolin (US 5 240 940);
Silthiofam, N-Allyl-4,5-dimethyl-2-(trimethylsilyl)thiophen-3-carboxamid [CAS RN 175217-20-6];
Thiabendazol, 2-(1,3-thiazol-4-yl)benzimidazol (US 3 017 415);
Thifluzamid, 2',6'-Dibrom-2-methyl-4'-trifluormethoxy-4-trifluormethyl-1,3-thiazol-5-carboxanilid [CAS RN 130000-40-7];
Thiophanat-methyl, 1,2-Phenylenbis(iminocarbonothioyl)bis(dimethylcarbamat) (DE-A 19 30 540);
Tiadinil, 3'-Chlor-4,4'-dimethyl-1,2,3-thiadiazol-5-carboxanilid [CAS RN 223580-51-6];
Tricyclazole, 5-methyl-1,2,4-triazolo[3,4-b][1,3]benzothiazole [CAS RN 41814-78-2];
Triforine, *N,N'*-{piperazine-1,4-diylbis[(trichlormethyl)methylene]}diformamide (DE-A 19 01 421);
5-Chlor-7-(4-methyl-piperidin-1-yl)-6-(2,4,6-trifluoro-phenyl)-[1,2,4]triazolo[1,5-a]pyrimidin (WO 98/46607);
Bordeauxbrühe, Mischung aus $CuSO_4$ x $3Cu(OH)_2$ x $3CaSO_4$ [CAS RN 8011-63-0] Kupferacetat, $Cu(OCOCH_3)_2$ [CAS RN 8011-63-0];
Kupferoxychlorid, $Cu_2Cl(OH)_3$ [CAS RN 1332-40-7];
Basisches Kupfersulfat, $CuSO_4$ [CAS RN 1344-73-6];
Binapacryl, (*RS*)-2-*sec*-Butyl-4,6-dinitrophenyl 3-methylcrotonat [CAS RN 485-31-4];
Dinocap, Mischung aus 2,6-Dinitro-4-octylphenylcrotonat und 2,4-Dinitro-6-octylphenylcrotonat, wobei "octyl" eine Mischung aus 1-Methylheptyl, 1-Ethylhexyl und 1-Propylpentyl ist (US 2 526 660);
Dinobuton, (RS)-2-sec-Butyl-4,6-dinitrophenyl isopropyl carbonat [CAS RN 973-21-7];
Nitrothal-isopropyl, diisopropyl 5-nitroisophthalat (Proc. Br. Insectic. Fungic. Conf. 7., Bd. 2, S. 673 (1973));
Fenpiclonil, 4-(2,3-Dichlorphenyl)-1 H-pyrrol-3-carbonitril (Proc. 1988 Br. Crop Prot. Conf. - Pests Dis., Bd. 1, S. 65);
Fludioxonil, 4-(2,2-Difluorbenzo[1,3]dioxol-4-yl)-1H-pyrrol-3-carbonitril (The Pesticide Manual, Hrsg.: The British Crop Protection Council, 10. Auflage 1995, S. 482);
Acibenzolar-S-methyl, Methyl 1,2,3-benzothiadiazol-7-carbothioat [CAS RN 135158-54-2];
Flubenthiavalicarb (Benthiavalicarb), {(S)-1-[(1R)-1-(6-Fluorbenzothiazol-2-yl)-ethylcarbamoyl]-2-methylpropyl}-carbaminsäureisopropylester (JP-A 09/323 984);
Carpropamid, 2,2-Dichlor-*N*-[1-(4-chlorphenyl)ethyl]-1-ethyl-3-methylcyclopropan-carboxamid [CAS RN 104030-54-8];
Chlorthalonil, 2,4,5,6-Tetrachlorisophthalonitril (US 3 290 353);
Cyflufenamid, (*Z*)-*N*-[α-(Cydopropylmethoxyimino)-2,3-difluor-6-(trifluormethyl)benzyl]-2-phenylacetamid (WO 96/19442);
Cymoxanil, 1-(2-Cyano-2-methoxyiminoacetyl)-3-ethylharnstoff (US 3 957 847);
Diclomezine, 6-(3,5-Dichlorophenyl-*p*-tolyl)pyridazin-3(2*H*)-on (US 4 052 395);
Diclocymet, (*RS*)-2-Cyano-*N*-[(*R*)-1-(2,4-dichlorphenyl)ethyl]-3,3-dimethylbutyramid [CAS RN 139920-32-4];
Diethofencarb, Isopropyl 3,4-diethoxycarbanilat (EP-A 78 663);
Edifenphos, *O*-Ethyl *S*,*S*-diphenyl phosphorodithioat (DE-A 14 93 736);
Ethaboxam, *N*-(Cyano-2-thienylmethyl)-4-ethyl-2-(ethylamino)-5-thiazolcarboxamid (EP-A 639 574);
Fenhexamid, N-(2,3-dichlor-4-hydroxypheny)-1-methylcyclohexancarboxamid (Proc. Br. Crop Prot. Conf. - Pests Dis., 1998, Bd. 2, S. 327);
Fentin acetat, Triphenylzinn (US 3 499 086);
Fenoxanil, *N*-(1-Cyano-1,2-dimethylpropyl)-2-(2,4-dichlorphenoxy)propanamid (EP-A 262 393);
Ferimzone, (Z)-2'-Methylacetophenon-4,6-dimethylpyrimidin-2-ylhydrazon [CAS RN 89269-64-7];
Fluazinam, 3-Chlor-N-[3-chlor-2,6-dinitro-4-(trifluormethyl)phenyl]-5-(trifluormethyl)-2-pyridinamin (The Pesticide Manual, Hrsg.: The British Crop Protection Council, 10. Auflage 1995, S. 474);
Fosetyl, Fosetyl-Aluminum, ethylphosphonat (FR 22 54 276);
Iprovalicarb, [(1S)-2-Methyl-1-(1-p-tolyl-ethylcarbamoyl)-propyl]carbaminsäure-isopropylester (EP-A 472 996);
Hexachlorbenzol (C. R. Seances Acad. Agric. Fr., Vol. 31, S. 24 (1945);
Mandipropamid, (*RS*)-2-(4-Chlorphenyl)-*N*-[3-methoxy-4-(prop-2-ynyloxy)phenethyl]-2-(prop-2-ynyloxy)acetamid (WO 03/042166);
Metrafenon, 3'-Brom-2,3,4,6'-tetramethoxy-2',6-dimethylbenzophenon (US 5 945 567);
Pencycuron, 1-(4-Chlorbenzyl)-1-cyclopentyl-3-phenylharnstoff (DE-A 27 32 257);
Penthiopyrad, (*RS*)-*N*-[2-(1,3-Dimethylbutyl)-3-thienyl]-1-methyl-3-(trifluormethyl)-1*H*-pyrazol-4-carboxamid (JP 10/130268);
Propamocarb, 3-(Dimethylamino)propylcarbaminsäureisopropylester (DE-A 15 67 169); Phthalid (DE-A 16 43 347);
Toloclofos-methyl, *O*-2,6-Dichlor-*p*-tolyl *O*,*O*-dimethyl phosphorothioat (GB 14 67 561); Quintozen, Pentachlornitrobenzol (DE-A 682 048);
Zoxamid, (*RS*)-3,5-Dichlor-*N*-(3-chlor-1-ethyl-1-methyl-2-oxopropyl)-*p*-toluamid [CAS RN 156052-68-5];
Captafol, *N*-(1,1,2,2-Tetrachlorethylthio)cyclohex-4-en-1,2-dicarboximid (Phytopathology 52, S. 754 (1962));
Captan, N-(Trichlormethylthio)cyclohex-4-en-1,2-dicarboximid (US 2 553 770);
Dichlofluanid, N-Dichlorfluormethylthio-*N',N'*-dimethyl-*N*-phenylsulfamid (DE-A 11 93 498);
Folpet, *N*-(Trichlormethylthio)phthalimid (US 2 553 770);
Tolylfluanid, *N*-Dichlorfluormethylthio-*N',N'*-dimethyl-*N*-*p*-tolylsulfamid (DE-A 11 93 498);
Dimethomorph, 3-(4-Chlorphenyl)-3-(3,4-dimethoxyphenyl)-1-morpholin-4-yl-propenon (EP-A 120 321);
Flumetover, 2-(3,4-Dimethoxyphenyl)-*N*-ethyl-α,α,α-trifluor-*N*-methyl-*p*-toluamid [AGROW Nr. 243, 22 (1995)];
Flumorph, 3-(4-Fluorphenyl)-3-(3,4-dimethoxyphenyl)-1-morpholin-4-yl-propenon (EP-A 860 438);
4-Difluormethyl-2-methyl-thiazol-5-carbonsäure-(4'-brom-biphenyl-2-yl)-amid,
4-Difluormethyl-2-methyl-thiazol-5-carbonsäure-(4'-trifluormethyl-biphenyl-2-yl)-amid,
4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid (WO 03/66610),
3,4-Dichlor-isothiazol-5-carbonsäure (2-cyano-phenyl) amid (WO 99/24413);
N-(2-(4-[3-(4-Chlor-phenyl)-prop-2-ynyloxy]-3-methoxy-phenyl)-ethyl)-2-methan-sulfonylamino-3-methyl-butyramid,
N-(2-(4-[3-(4-Chlor-phenyl)-prop-2-ynyloxy]-3-methoxy-phenyl)-ethyl)-2-ethanesulfonylamino-3-methyl-butyramid (WO 04/49804);
3-[5-(4-Chlor-phenyl)-2,3-dimethyl-isoxazolidin-3-yl]-pyridin (EP-A 10 35 122);
2-Butoxy-6-iodo-3-propyl-chromen-4-on (WO 03/14103);
3-(3-Brom-6-fluor-2-methyl-indol-1-sulfonyl)-[1,2,4]triazol-1-sulfonsäure dimethylamid (EP-A 10 31 571);

(2-Chlor-5-[1-(3-methyl-benzyloxyimino)-ethyl]-benzyl)-carbaminsäuremethylester,
(2-Chlor-5-[1-(6-methyl-pyrid in-2-yl methoxyimi no)-ethyl]-benzyl)-carbaminsäuremethylester (EP-A 12 01 648);
3-(4-Chlor-phenyl)-3-(2-isopropoxy-carbonylamino-3-methyl-butyrylamino)-propionsäure-methylester (EP-A 10 28 125);
Azoxystrobin, 2-{2-[6-(2-Cyano-1-vinyl-penta-1,3-dienyloxy)-pyrimidin-4-yloxy]-phenyl}-3-methoxy-acrylsäuremethylester (EP-A 382 375),
Dimoxystrobin, (E)-2-(methoxyimino)-N-methyl-2-[a-(2,5-xylyloxy)-o-tolyl]acetamid (EP-A 477 631);
Fluoxastrobin, (E)-{2-[6-(2-chlorphenoxy)-5-fluorpyrimidin-4-yloxy]phenyl}(5,6-dihydro-1,4,2-dioxazin-3-yl)methanon-O-methyloxim (WO 97/27189);
Kresoxim-methyl, (E)-Methoxyimino[α-(o-tolyloxy)-o-tolyl]essigsäuremethylester (EP-A 253 213);
Metominostrobin, (E)-2-(Methoxyimino)-N-methyl-2-(2-phenoxyphenyl)acetamid (EP-A 398 692);
Orysastrobin, (2E)-2-(Methoxyimino)-2-{2-[(3E,5E,6E)-5-(methoxyimino)-4,6-dimethyl-2,8-dioxa-3,7-diazanona-3,6-dien-1-yl)]phenyl}-N-methylacetamid (WO 97/15552);
Picoxystrobin, 3-Methoxy-2-[2-(6-trifluormethyl-pyridin-2-yloxymethyl)-phenyl]-acrylsäuremethylester (EP-A 278 595);
Pyraclostrobin, N-{2-[1-(4-Chlorphenyl)-1H-pyrazol-3-yloxymethyl]phenyl}(N-methoxy)carbaminsäuremethylester (WO 96/01256);
Trifloxystrobin, (E)-Methoxyimino-{(E)-α-[1-(α,α,α-trifluor-m-tolyl)ethylidenaminooxy]-o-tolyl}essigsäuremethylester (EP-A 460 575);
2-[ortho-(2,5-Dimethylphenyl-oxymethylen)phenyl]-3-methoxy-acrylsäuremethylester (EP-A 226 917);
5-Chlor-7-(4-methyl-piperidin-1-yl)-6-(2,4,6-trifluor-phenyl)-[1,2,4]triazolo[1,5-a]pyrimidin (WO 98/46608);
3,4-Dichlor-N-(2-cyanophenyl)-isothiazol-5-carbonsäureamid (WO 99/24413);
Verbindungen der Formel III (WO 04/049804);
N-(2-(4-[3-(4-Chlor-phenyl)-prop-2-ynyloxy]-3-methoxy-phenyl)-ethyl)-2-methanesulfonylamino-3-methyl-butyramid und N-(2-(4-[3-(4-Chlor-phenyl)-prop-2-ynyloxy]-3-methoxy-phenyl)-ethyl)-2-ethanesulfonylamino-3-methyl-butyramid (WO 03/66609);
2-Butoxy-6-iodo-3-propyl-chromen-4-on (WO 03/14103);
3-(3-Brom-6-fluor-2-methyl-indol-1-sulfonyl)-[1,2,4]triazol-1-sulfonsäuredimethylamid (WO 03/053145);
3-(4-Chlor-phenyl)-3-(2-isopropoxycarbonylamino-3-methyl-butyrylamino)-propansäuremethylester (EP-A 1028125).

Im Hinblick auf eine Senkung der Aufwandmengen und eine Verbreiterung des Wirkungsspektrums der bekannten Verbindungen I und II lagen der vorliegenden Erfindung Mischungen als Aufgabe zugrunde, die bei verringerter Gesamtmenge an ausgebrachten Wirkstoffen eine verbesserte Wirkung gegen Schadpilze, insbesondere für bestimmte Indikationen, zeigen.

Demgemäss wurden die eingangs definierten Mischungen der Wirkstoffe I und II gefunden. Es wurde außerdem gefunden, dass sich bei gleichzeitiger, und zwar gemeinsamer oder getrennter Anwendung einer Verbindung I und von mindestens einem der Wirkstoffe II, oder der Verbindung I und mindestens einem der Wirkstoffe II nacheinander, Schadpilze besser bekämpfen lassen als mit den Einzelverbindungen allein (synergistische Mischungen).

Die Verbindungen I lassen sich als Synergisten für eine Vielzahl verschiedener Wirkstoffe verwenden. Durch gleichzeitige gemeinsame oder getrennte Anwendung einer

Verbindung I mit mindestens einem Wirkstoff II wird die fungizide Wirksamkeit in überadditivem Maße erhöht.

In Formel I steht Halogen für Fluor, Chlor, Brom oder Jod, vorzugsweise für Fluor oder Chlor;
$C_1$-$C_4$-Alkyl steht für Methyl, Ethyl, n-Propyl, 1-Methylethyl, n-Butyl, 1-Methylpropyl, 2-Methylpropyl oder 1,1-Dimethylethyl, vorzugsweise für Methyl oder Ethyl;
$C_1$-$C_4$-Halogenalkyl steht für einen teilweise oder vollständig halogenierten $C_1$-$C_4$-Alkylrest, wobei das/die Halogenatom(e) insbesondere Fluor und/oder Chlor ist/sind, also z.B. Chlormethyl, Brommethyl, Dichlormethyl, Trichlormethyl, Fluormethyl, Difluormethyl, Trifluormethyl, Chlorfluormethyl, Dichlorfluormethyl, Chlordifluormethyl, 1-Chlorethyl, 1-Bromethyl, 1-Fluorethyl, 2-Fluorethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl, Pentafluorethyl, Heptafluorpropyl oder Nonafluorbutyl, insbesondere für Halogenmethyl, besonders bevorzugt für $CH_2$-Cl, $CH(Cl)_2$, $CH_2$-F, $CH(F)_2$, $CF_3$, CHFCl, $CF_2Cl$ oder $CF(Cl)_2$;
$C_1$-$C_4$-Alkoxy steht für $OCH_3$, $OC_2H_5$, $OCH_2$-$C_2H_5$, $OCH(CH_3)_2$, n-Butoxy, $OCH(CH_3)$-$C_2H_5$, $OCH_2$-$CH(CH_3)_2$ oder $OC(CH_3)_3$, vorzugsweise für $OCH_3$ oder $OC_2H_5$;
$C_1$-$C_4$-Halogenalkoxy steht für einen teilweise oder vollständig halogenierten $C_1$-$C_4$-Alkoxyrest, wobei das/die Halogenatom(e) insbesondere Fluor und/oder Chlor ist/sind, also z.B. Chlormethoxy, Brommethoxy, Dichlormethoxy, Trichlormethoxy, Fluormethoxy, Difluormethoxy, Trifluormethoxy, Chlorfluormethoxy, Dichlorfluormethoxy, Chlordifluormethoxy, 1-Chlorethoxy, 1-Bromethoxy, 1-Fluorethoxy, 2-Fluorethoxy, 2,2-Difluorethoxy, 2,2,2-Trifluorethoxy, 2-Chlor-2-fluorethoxy, 2-Chlor-2,2-difluorethoxy, 2,2-Dichlor-2-fluorethoxy, 2,2,2-Trichlorethoxy, Pentafluorethoxy, Heptafluorpropoxy oder Nonafluorbutoxy, insbesondere für Halogenmethoxy, besonders bevorzugt für $OCH_2$-Cl, $OCH(Cl)_2$, $OCH_2$-F, $OCH(F)_2$, $OCF_3$, OCHFCl, $OCF_2Cl$ oder $OCF(Cl)_2$;
$C_1$-$C_4$-Alkylthio steht für $SCH_3$, $SC_2H_5$, $SCH_2$-$C_2H_5$, $SCH(CH_3)_2$, n-Butylthio, $SCH(CH_3)$-$C_2H_5$, $SCH_2$-$CH(CH_3)_2$ oder

$SC(CH_3)_3$, vorzugsweise für $SCH_3$ oder $SC_2H_5$.

Unter den 1-Methyl-pyrazol-4-ylcarbonsäureaniliden I sind einerseits diejenigen bevorzugt, bei denen X Sauerstoff bedeutet.

Andererseits sind diejenigen Verbindungen I bevorzugt, bei denen X für Schwefel steht.

Für die erfindungsgemäßen Mischungen sind außerdem Verbindungen der Formel I bevorzugt, bei denen $R^1$ für $C_1$-$C_4$-Alkyl oder $C_1$-$C_4$-Halogenalkyl, vorzugsweise Methyl oder Halogenmethyl, insbesondere $CH_3$, $CHF_2$ oder $CF_3$, steht.

Bevorzugt sind ferner Verbindungen 1, bei denen $R^2$ für Wasserstoff, Fluor oder Chlor, insbesondere Wasserstoff, steht.

Des weiteren sind diejenigen Verbindungen I bevorzugt, bei denen $R^3$ für Halogen, $C_1$-$C_4$-Alkyl, $C_1$-$C_4$-Halogenalkyl, $C_1$-$C_4$-Alkoxy, $C_1$-$C_4$-Halogenalkoxy oder $C_1$-$C_4$-Alkylthio, vorzugsweise für Halogen, Methyl, Halogenmethyl, Methoxy, Halogenmethoxy oder Methylthio, insbesondere F, Cl, $CH_3$, $CF_3$, $OCH_3$, $OCHF_2$, $OCF_3$ oder $SCH_3$ steht.

Besonders bevorzugt sind die in der folgenden Tabelle 1 aufgelisteten Verbindungen I, bei denen X für Sauerstoff steht.

Tabelle 1

| Nr. | $R^1$ | $R^2$ | $R^3$ |
|---|---|---|---|
| 1 | Methyl | Wasserstoff | Nitro |
| 2 | Methyl | Wasserstoff | Cyano |
| 3 | Methyl | Wasserstoff | Fluor |
| 4 | Methyl | Wasserstoff | Chlor |
| 5 | Methyl | Wasserstoff | Brom |
| 6 | Methyl | Wasserstoff | Jod |
| 7 | Methyl | Wasserstoff | Methyl |
| 8 | Methyl | Wasserstoff | Trifluormethyl |
| 9 | Methyl | Wasserstoff | Methoxy |
| 10 | Methyl | Wasserstoff | Difluormethoxy |
| 11 | Methyl | Wasserstoff | Trifluormethoxy |
| 12 | Methyl | Wasserstoff | Methylthio |
| 13 | Difluormethyl | Wasserstoff | Nitro |
| 14 | Difluormethyl | Wasserstoff | Cyano |
| 15 | Difluormethyl | Wasserstoff | Fluor |
| 16 | Difluormethyl | Wasserstoff | Chlor |
| 17 | Difluormethyl | Wasserstoff | Brom |
| 18 | Difluormethyl | Wasserstoff | Jod |
| 19 | Difluormethyl | Wasserstoff | Methyl |
| 20 | Difluormethyl | Wasserstoff | Trifluormethyl |
| 21 | Difluormethyl | Wasserstoff | Methoxy |
| 22 | Difluormethyl | Wasserstoff | Difluormethoxy |
| 23 | Difluormethyl | Wasserstoff | Trifluormethoxy |
| 24 | Difluormethyl | Wasserstoff | Methylthio |
| 25 | Trifluormethyl | Wasserstoff | Nitro |
| 26 | Trifluormethyl | Wasserstoff | Cyano |
| 27 | Trifluormethyl | Wasserstoff | Fluor |
| 28 | Trifluormethyl | Wasserstoff | Chlor |

(fortgesetzt)

| Nr. | $R^1$ | $R^2$ | $R^3$ |
|---|---|---|---|
| 29 | Trifluormethyl | Wasserstoff | Brom |
| 30 | Trifluormethyl | Wasserstoff | Jod |
| 31 | Trifluormethyl | Wasserstoff | Methyl |
| 32 | Trifluormethyl | Wasserstoff | Trifluormethyl |
| 33 | Trifluormethyl | Wasserstoff | Methoxy |
| 34 | Trifluormethyl | Wasserstoff | Difluormethoxy |
| 35 | Trifluormethyl | Wasserstoff | Trifluormethoxy |
| 36 | Trifluormethyl | Wasserstoff | Methylthio |
| 37 | Methyl | Fluor | Nitro |
| 38 | Methyl | Fluor | Cyano |
| 39 | Methyl | Fluor | Fluor |
| 40 | Methyl | Fluor | Chlor |
| 41 | Methyl | Fluor | Brom |
| 42 | Methyl | Fluor | Jod |
| 43 | Methyl | Fluor | Methyl |
| 44 | Methyl | Fluor | Trifluormethyl |
| 45 | Methyl | Fluor | Methoxy |
| 46 | Methyl | Fluor | Difluormethoxy |
| 47 | Methyl | Fluor | Trifluormethoxy |
| 48 | Methyl | Fluor | Methylthio |
| 49 | Difluormethyl | Fluor | Nitro |
| 50 | Difluormethyl | Fluor | Cyano |
| 51 | Difluormethyl | Fluor | Fluor |
| 52 | Difluormethyl | Fluor | Chlor |
| 53 | Difluormethyl | Fluor | Brom |
| 54 | Difluormethyl | Fluor | Jod |
| 55 | Difluormethyl | Fluor | Methyl |
| 56 | Difluormethyl | Fluor | Trifluormethyl |
| 57 | Difluormethyl | Fluor | Methoxy |
| 58 | Difluormethyl | Fluor | Difluormethoxy |
| 59 | Difluormethyl | Fluor | Trifluormethoxy |
| 60 | Difluormethyl | Fluor | Methylthio |
| 61 | Trifluormethyl | Fluor | Nitro |
| 62 | Trifluormethyl | Fluor | Cyano |
| 63 | Trifluormethyl | Fluor | Fluor |
| 64 | Trifluormethyl | Fluor | Chlor |
| 65 | Trifluormethyl | Fluor | Brom |
| 66 | Trifluormethyl | Fluor | Jod |

(fortgesetzt)

| Nr. | $R^1$ | $R^2$ | $R^3$ |
|---|---|---|---|
| 67 | Trifluormethyl | Fluor | Methyl |
| 68 | Trifluormethyl | Fluor | Trifluormethyl |
| 69 | Trifluormethyl | Fluor | Methoxy |
| 70 | Trifluormethyl | Fluor | Difluormethoxy |
| 71 | Trifluormethyl | Fluor | Trifluormethoxy |
| 72 | Trifluormethyl | Fluor | Methylthio |
| 73 | Methyl | Chlor | Nitro |
| 74 | Methyl | Chlor | Cyano |
| 75 | Methyl | Chlor | Fluor |
| 76 | Methyl | Chlor | Chlor |
| 77 | Methyl | Chlor | Brom |
| 78 | Methyl | Chlor | Jod |
| 79 | Methyl | Chlor | Methyl |
| 80 | Methyl | Chlor | Trifluormethyl |
| 81 | Methyl | Chlor | Methoxy |
| 82 | Methyl | Chlor | Difluormethoxy |
| 83 | Methyl | Chlor | Trifluormethoxy |
| 84 | Methyl | Chlor | Methylthio |
| 85 | Difluormethyl | Chlor | Nitro |
| 86 | Difluormethyl | Chlor | Cyano |
| 87 | Difluormethyl | Chlor | Fluor |
| 88 | Difluormethyl | Chlor | Chlor |
| 89 | Difluormethyl | Chlor | Brom |
| 90 | Difluormethyl | Chlor | Jod |
| 91 | Difluormethyl | Chlor | Methyl |
| 92 | Difluormethyl | Chlor | Trifluormethyl |
| 93 | Difluormethyl | Chlor | Methoxy |
| 94 | Difluormethyl | Chlor | Difluormethoxy |
| 95 | Difluormethyl | Chlor | Trifluormethoxy |
| 96 | Difluormethyl | Chlor | Methylthio |
| 97 | Trifluormethyl | Chlor | Nitro |
| 98 | Trifluormethyl | Chlor | Cyano |
| 99 | Trifluormethyl | Chlor | Fluor |
| 100 | Trifluormethyl | Chlor | Chlor |
| 101 | Trifluormethyl | Chlor | Brom |
| 102 | Trifluormethyl | Chlor | Jod |
| 103 | Trifluormethyl | Chlor | Methyl |
| 104 | Trifluormethyl | Chlor | Trifluormethyl |

(fortgesetzt)

| Nr. | $R^1$ | $R^2$ | $R^3$ |
|---|---|---|---|
| 105 | Trifluormethyl | Chlor | Methoxy |
| 106 | Trifluormethyl | Chlor | Difluormethoxy |
| 107 | Trifluormethyl | Chlor | Trifluormethoxy |
| 108 | Trifluormethyl | Chlor | Methylthio |

Ganz besonders bevorzugt sind
1-Methyl-3-trifluormethyl-pyrazol-4-ylcarbonsäure-N-(2'-fl uor-biphen-2-yl)-amid,
1-Methyl-3-trifluormethyl-pyrazol-4-ylcarbonsäure-N-(2'-chlor-biphenyl-2-yl)-amid,
1-Methyl-3-trifluormethyl-pyrazol-4-ylcarbonsäure-N-(2'-methyl-biphen-2-yl)-amid,
1-Methyl-3-trifluormethyl-pyrazol-4-ylcarbonsäure-N-(2'-trifluormethyl-biphen-2-yl)-amid, 3-Difluormethyl-1-methyl-pyrazol-4-ylcarbonsäure-N-(2'-fluor-biphen-2-yl)-amid,
3-Difluormethyl-1-methyl-pyrazol-4-ylcarbonsäure-N-(2'-chlor-biphenyl-2-yl)-amid, 3-Difluormethyl-1-methyl-pyrazol-4-ylcarbonsäure-N-(2'-methyl-biphen-2-yl)-amid und 3-Difluormethyl-1-methyl-pyrazol-4-ylcarbonsäure-N-(2'-trifluormethyl-biphen-2-yl)-amid.

Bevorzugt sind Mischungen einer Verbindung der Formel I mit mindestens einem Wirkstoff ausgewählt aus der Gruppe der A) Azole.

Bevorzugt sind auch Mischungen einer Verbindung der Formel I mit mindestens einem Wirkstoff ausgewählt aus der Gruppe der B) Strobilurine.

Bevorzugt sind Mischungen einer Verbindung der Formel I mit mindestens einem Wirkstoff ausgewählt aus der Gruppe der C) Carbonsäureamide.

Weiterhin bevorzugt sind auch Mischungen einer Verbindung der Formel I mit mindestens einem Wirkstoff ausgewählt aus der Gruppe der D) Heterocyclischen Verbindungen.

Weiterhin bevorzugt sind auch Mischungen einer Verbindung der Formel I mit mindestens einem Wirkstoff ausgewählt aus der Gruppe der E) Carbamate.

Weiterhin bevorzugt sind auch Mischungen einer Verbindung der Formel I mit mindestens einem Wirkstoff ausgewählt aus der Gruppe der F) Sonstigen Fungizide.

Weiterhin bevorzugt sind auch Mischungen einer Verbindung der Formel I mit mindestens einem Wirkstoff, ausgewählt aus der Gruppe der A) Azole, ausgewählt aus Cyproconazol, Difenoconazol, Epoxiconazol, Fluquinconazol, Flusilazol, Flutriafol, Metconazol, Myclobutanil, Penconazol, Propiconazol, Prothioconazol, Triadimefon, Triadimenol, Tebuconazol, Tetraconazol, Triticonazol, Prochloraz, Cyazofamid, Benomyl, Carbendazim, Ethaboxam.

Besonders bevorzugt sind auch Mischungen einer Verbindung der Formel I mit mindestens einem Wirkstoff, ausgewählt aus der Gruppe der A) Azole, ausgewählt aus Cyproconazol, Difenoconazol, Epoxiconazol, Fluquinconazol, Flusilazol, Flutriafol, Metconazol, Myclobutanil, Propiconazol, Prothioconazol, Triadimefon, Triadimenol, Tebuconazol, Tetraconazol, Triticonazol, Prochloraz, Cyazofamid, Benomyl, Carbendazim.

Ganz besonders bevorzugt sind auch Mischungen einer Verbindung der Formel I mit mindestens einem Wirkstoff, ausgewählt aus der Gruppe der A) Azole, ausgewählt aus Epoxiconazol, Fluquinconazol, Flutriafol, Metconazol, Tebuconazol, Triticonazol, Prochloraz, Carbendazim.

Bevorzugt sind auch Mischungen einer Verbindung der Formel I mit mindestens einem Wirkstoff ausgewählt aus der Gruppe der B) Strobilurine, ausgewählt aus Azoxystrobin, Dimoxystrobin, Fluoxastrobin, Kresoxim-methyl, Orysastrobin, Picoxystrobin, Pyraclostrobin, Trifloxystrobin.

Besonders bevorzugt sind auch Mischungen einer Verbindung der Formel I mit mindestens einem Wirkstoff ausgewählt aus der Gruppe der B) Strobilurine, ausgewählt aus Kresoxim-methyl, Orysastrobin und Pyraclostrobin.

Ganz besonders bevorzugt sind auch Mischungen einer Verbindung der Formel I mit Pyraclostrobin.

Bevorzugt sind auch Mischungen einer Verbindung der Formel I mit mindestens einem Wirkstoff, ausgewählt aus der Gruppe der C) Carbonsäureamide, ausgewählt aus Fenhexamid, Metalaxyl, Mefenoxam, Ofurace, Dimethomorph, Flumorph, Fluopicolid (Picobenzamid), Zoxamid, Carpropamid und Mandipropamid.

Besonders bevorzugt sind auch Mischungen einer Verbindung der Formel I mit mindestens einem Wirkstoff, ausgewählt aus der Gruppe der C) Carbonsäureamide, ausgewählt aus Fenhexamid, Metalaxyl, Mefenoxam, Ofurace, Dimethomorph, Zoxamid, und Carpropamid.

Bevorzugt sind auch Mischungen einer Verbindung der Formel I mit mindestens einem Wirkstoff, ausgewählt aus der Gruppe der D) Heterocylischen Verbindungen, ausgewählt aus Fluazinam, Cyprodinil, Fenarimol, Mepanipyrim, Pyrimethanil, Triforin, Fludioxonil, Dodemorph, Fenpropimorph, Tridemorph, Fenpropidin, Iprodion, Vinclozolin, Famoxadon, Fenamidon, Probenazol, 5-Chlor-7-(4-methyl-piperidin-1-yl)-6-(2,4,6-trifluor-phenyl)-[1,2,4]triazolo[1,5-a]pyrimidin,

Proquinazid, Acibenzolar-S-methyl, Captafol, Folpet, Fenoxanil, Quinoxyfen.

Besonders bevorzugt sind auch Mischungen einer Verbindung der Formel I mit mindestens einem Wirkstoff, ausgewählt aus der Gruppe der D) Heterocyclische Verbindungen, ausgewählt aus Pyrimethanil, Dodemorph, Fenpropimorph, Tridemorph, Iprodion, Vinclozolin, 5-Chlor-7-(4-methyl-piperidin-1-yl)-6-(2,4,6-trifluor-phenyl)-[1,2,4]triazolo [1,5-a]pyrimidin, Quinoxyfen.

Bevorzugt sind auch Mischungen einer Verbindung der Formel I mit mindestens einem Wirkstoff ausgewählt aus der Gruppe der E) Carbamate, ausgewählt aus Mancozeb, Metiram, Propineb, Thiram, Iprovalicarb, Flubenthiavalicarb, Propamocarb.

Besonders bevorzugt sind auch Mischungen einer Verbindung der Formel I mit mindestens einem Wirkstoff ausgewählt aus der Gruppe der E) Carbamate, ausgewählt aus Mancozeb und Metiram.

Bevorzugt sind auch Mischungen einer Verbindung der Formel I mit mindestens einem Wirkstoff ausgewählt aus der Gruppe der F) Sonstigen Fungizide, ausgewählt aus Dithianon, Fentin-Salzen wie Fentin-Acetat, Fosetyl, Fosetyl-Aluminium, Phosphoriger Säure und deren Salzen, Chlorothalonil, Dichlofluanid, Thiophanate-Methyl, Kupferacetat, Kupferhydroxid, Kupferoxychlorid, basisches Kupfersulfat, Schwefel, Cymoxanil, Metrafenon und Spiroxamin.

Besonders bevorzugt sind auch Mischungen einer Verbindung der Formel I mit mindestens einem Wirkstoff ausgewählt aus der Gruppe der F) Sonstigen Fungizide, ausgewählt aus Phosphoriger Säure und deren Salzen, Chlorothalonil und Metrafenon.

Bevorzugt sind auch Dreiermischungen einer Verbindung der Formel I mit zwei der obengenannten Wirkstoffe II.

Bevorzugte Wirkstoffkombinationen sind in den folgenden Tabellen 2 bis 7 aufgeführt:

Tabelle 2

| Wirkstoffkombinationen von Verbindungen I mit Wirkstoffen II der Gruppe A): | | |
|---|---|---|
| Mischung | Verbindung der Formel I(X = Sauerstoff, $R^2$ = H) | Wirkstoff II |
| Nr. A.1 | $R^1 = CF_3$, $R^3 = F$ | Epoxiconazol |
| Nr. A.2 | $R^1 = CF_3$, $R^3 = Cl$ | Epoxiconazol |
| Nr. A.3 | $R^1 = CF_3$, $R^3 = CH_3$ | Epoxiconazol |
| Nr. A.4 | $R^1 = CF_3$, $R^3 = CF_3$ | Epoxiconazol |
| Nr. A.5 | $R^1 = CHF_2$; $R^3 = F$ | Epoxiconazol |
| Nr. A.6 | $R^1 = CHF_2$; $R^3 = Cl$ | Epoxiconazol |
| Nr. A.7 | $R^1 = CHF_2$; $R^3 = CH_3$ | Epoxiconazol |
| Nr. A.8 | $R^1 = CHF_2$; $R^3 = CF_3$ | Epoxiconazol |
| Nr. A.9 | $R^1 = CF_3$, $R^3 = F$ | Metconazol |
| Nr. A. 10 | $R^1 = CF_3$, $R^3 = Cl$ | Metconazol |
| Nr. A.11 | $R^1 = CF_3$, $R^3 = CH_3$ | Metconazol |
| Nr. A.12 | $R^1 = CF_3$, $R^3 = CF_3$ | Metconazol |
| Nr. A.13 | $R^1 = CHF_2$; $R^3 = F$ | Metconazol |
| Nr. A.14 | $R^1 = CHF_2$; $R^3 = Cl$ | Metconazol |
| Nr. A.15 | $R^1 = CHF_2$; $R^3 = CH_3$ | Metconazol |
| Nr. A.16 | $R^1 = CHF_2$; $R^3 = CF_3$ | Metconazol |
| Nr. A.17 | $R^1 = CF_3$, $R^3 = F$ | Tebuconazol |
| Nr. A.18 | $R^1 = CF_3$, $R^3 = Cl$ | Tebuconazol |
| Nr. A.19 | $R^1 = CF_3$, $R^3 = CH_3$ | Tebuconazol |
| Nr. A.20 | $R^1 = CF_3$, $R^3 = CF_3$ | Tebuconazol |
| Nr. A.21 | $R^1 = CHF_2$; $R^3 = F$ | Tebuconazol |
| Nr. A.22 | $R^1 = CHF_2$; $R^3 = Cl$ | Tebuconazol |
| Nr. A.23 | $R^1 = CHF_2$; $R^3 = CH_3$ | Tebuconazol |

(fortgesetzt)

| Wirkstoffkombinationen von Verbindungen I mit Wirkstoffen II der Gruppe A): | | |
|---|---|---|
| Mischung | Verbindung der Formel I (X = Sauerstoff, $R^2$ = H) | Wirkstoff II |
| Nr. A.24 | $R^1 = CHF_2$; $R^3 = CF_3$ | Tebuconazol |
| Nr. A.25 | $R^1 = CF_3$; $R^3 = F$ | Fluquinconazol |
| Nr. A.26 | $R^1 = CF_3$; $R^3 = Cl$ | Fluquinconazol |
| Nr. A.27 | $R^1 = CF_3$; $R^3 = CH_3$ | Fluquinconazol |
| Nr. A.28 | $R^1 = CF_3$; $R^3 = CF_3$ | Fluquinconazol |
| Nr. A.29 | $R^1 = CHF_2$; $R^3 = F$ | Fluquinconazol |
| Nr. A.30 | $R^1 = CHF_2$; $R^3 = Cl$ | Fluquinconazol |
| Nr. A.31 | $R^1 = CHF_2$; $R^3 = CH_3$ | Fluquinconazol |
| Nr. A.32 | $R^1 = CHF_2$; $R^3 = CF_3$ | Fluquinconazol |
| Nr. A.33 | $R^1 = CF_3$; $R^3 = F$ | Flutriafol |
| Nr. A.34 | $R^1 = CF_3$; $R^3 = Cl$ | Flutriafol |
| Nr. A.35 | $R^1 = CF_3$; $R^3 = CH_3$ | Flutriafol |
| Nr. A.36 | $R^1 = CF_3$; $R^3 = CF_3$ | Flutriafol |
| Nr. A.37 | $R^1 = CHF_2$; $R^3 = F$ | Flutriafol |
| Nr. A.38 | $R^1 = CHF_2$; $R^3 = Cl$ | Flutriafol |
| Nr. A.39 | $R^1 = CHF_2$; $R^3 = CH_3$ | Flutriafol |
| Nr. A.40 | $R^1 = CHF_2$; $R^3 = CF_3$ | Flutriafol |
| Nr. A.41 | $R^1 = CF_3$, $R^3 = F$ | Triticonazol |
| Nr. A.42 | $R^1 = CF_3$, $R^3 = Cl$ | Triticonazol |
| Nr. A.43 | $R^1 = CF_3$, $R^3 = CH_3$ | Triticonazol |
| Nr. A.44 | $R^1 = CF_3$; $R^3 = CF_3$ | Triticonazol |
| Nr. A.45 | $R^1 = CHF_2$; $R^3 = F$ | Triticonazol |
| Nr. A.46 | $R^1 = CHF_2$; $R^3 = Cl$ | Triticonazol |
| Nr. A.47 | $R^1 = CHF_2$; $R^3 = CH_3$ | Triticonazol |
| Nr. A.48 | $R^1 = CHF_2$; $R^3 = CF_3$ | Triticonazol |
| Nr. A.49 | $R^1 = CF_3$, $R^3 = F$ | Prochloraz |
| Nr. A.50 | $R^1 = CF_3$, $R^3 = Cl$ | Prochloraz |
| Nr. A.51 | $R^1 = CF_3$, $R^3 = CH_3$ | Prochloraz |
| Nr. A.52 | $R^1 = CF_3$, $R^3 = CF_3$ | Prochloraz |
| Nr. A.53 | $R^1 = CHF_2$; $R^3 = F$ | Prochloraz |
| Nr. A.54 | $R^1 = CHF_2$; $R^3 = Cl$ | Prochloraz |
| Nr. A.55 | $R^1 = CHF_2$; $R^3 = CH_3$ | Prochloraz |
| Nr. A.56 | $R^1 = CHF_2$; $R^3 = CF_3$ | Prochloraz |
| Nr. A.57 | $R^1 = CF_3$, $R^3 = F$ | Carbendazim |
| Nr. A.58 | $R^1 = CF_3$, $R^3 = Cl$ | Carbendazim |
| Nr. A.59 | $R^1 = CF_3$, $R^3 = CH_3$ | Carbendazim |
| Nr. A.60 | $R^1 = CF_3$, $R^3 = CF_3$ | Carbendazim |

(fortgesetzt)

| Wirkstoffkombinationen von Verbindungen I mit Wirkstoffen II der Gruppe A): | | |
|---|---|---|
| Mischung | Verbindung der Formel I (X = Sauerstoff, $R^2$ = H) | Wirkstoff II |
| Nr. A.61 | $R^1 = CHF_2$; $R^3 = F$ | Carbendazim |
| Nr. A.62 | $R^1 = CHF_2$; $R^3 = Cl$ | Carbendazim |
| Nr. A.63 | $R^1 = CHF_2$; $R^3 = CH_3$ | Carbendazim |
| Nr. A.64 | $R^1 = CHF_2$; $R^3 = CF_3$ | Carbendazim |

Tabelle 3

| Wirkstoffkombinationen von Verbindungen I mit Wirkstoffen II der Gruppe B): | | |
|---|---|---|
| Mischung | Verbindungen der Formel I (X = Sauerstoff, $R^2$ = H) | Wirkstoff II |
| Nr. B.1 | $R^1 = CF_3$; $R^3 = F$ | Kresoxim-methyl |
| Nr. B.2 | $R^1 = CF_3$, $R^3 = Cl$ | Kresoxim-methyl |
| Nr. B.3 | $R^1 = CF_3$; $R^3 = CH_3$ | Kresoxim-methyl |
| Nr. B.4 | $R^1 = CF_3$; $R^3 = CF_3$ | Kresoxim-methyl |
| Nr. B.5 | $R^1 = CHF_2$; $R^3 = F$ | Kresoxim-methyl |
| Nr. B.6 | $R^1 = CHF_2$; $R^3 = Cl$ | Kresoxim-methyl |
| Nr. B.7 | $R^1 = CHF_2$; $R^3 = CH_3$ | Kresoxim-methyl |
| Nr. B.8 | $R^1 = CHF_2$; $R^3 = CF_3$ | Kresoxim-methyl |
| Nr. B.9 | $R^1 = CF_3$, $R^3 = F$ | Pyraclostrobin |
| Nr. B.10 | $R^1 = CF_3$, $R^3 = Cl$ | Pyraclostrobin |
| Nr. B.11 | $R^1 = CF_3$, $R^3 = CH_3$ | Pyraclostrobin |
| Nr. B.12 | $R^1 = CF_3$; $R^3 = CF_3$ | Pyraclostrobin |
| Nr. B.13 | $R^1 = CHF_2$; $R^3 = F$ | Pyraclostrobin |
| Nr. B.14 | $R^1 = CHF_2$; $R^3 = Cl$ | Pyraclostrobin |
| Nr. B.15 | $R^1 = CHF_2$; $R^3 = CH_3$ | Pyraclostrobin |
| Nr. B.16 | $R^1 = CHF_2$; $R^3 = CF_3$ | Pyraclostrobin |
| Nr. B.17 | $R^1 = CF_3$; $R^3 = F$ | Orysastrobin |
| Nr. B.18 | $R^1 = CF_3$; $R^3 = Cl$ | Orysastrobin |
| Nr. B.19 | $R^1 = CF_3$; $R^3 = CH_3$ | Orysastrobin |
| Nr. B.20 | $R^1 = CF_3$; $R^3 = CF_3$ | Orysastrobin |
| Nr. B.21 | $R^1 = CHF_2$; $R^3 = F$ | Orysastrobin |
| Nr. B.22 | $R^1 = CHF_2$; $R^3 = Cl$ | Orysastrobin |
| Nr. B.23 | $R^1 = CHF_2$; $R^3 = CH_3$ | Orysastrobin |
| Nr. B.24 | $R^1 = CHF_2$; $R^3 = CF_3$ | Orysastrobin |

Tabelle 4

| Wirkstoffkombinationen von Verbindungen I mit Wirkstoffen II der Gruppe C): | | |
|---|---|---|
| Mischung | Verbindungen der Formel I (X = 0, $R^2$ = H) | Wirkstoff II |
| Nr. C.1 | $R^1 = CF_3$; $R^3$ = F | Dimethomorph |
| Nr. C.2 | $R^1 = CF_3$, $R^3$ = Cl | Dimethomorph |
| Nr. C.3 | $R^1 = CF_3$, $R^3 = CH_3$ | Dimethomorph |
| Nr. C.4 | $R^1 = CF_3$, $R^3 = CF_3$ | Dimethomorph |
| Nr. C.5 | $R^1 = CHF_2$; $R^3$ = F | Dimethomorph |
| Nr. C.6 | $R^1 = CHF_2$; $R^3$ = Cl | Dimethomorph |
| Nr. C.7 | $R^1 = CHF_2$; $R^3 = CH_3$ | Dimethomorph |
| Nr. C.8 | $R^1 = CHF_2$; $R^3 = CF_3$ | Dimethomorph |

Tabelle 5

| Wirkstoffkombinationen von Verbindungen I (X = Sauerstoff, $R^2$ = Wasserstoff) mit Wirkstoffen II der Gruppe D): | | |
|---|---|---|
| Mischung | Verbindungen der Formel I | Wirkstoff II |
| Nr. D.1 | $R^1 = CF_3$, $R^3$ = F | Pyrimethanil |
| Nr. D:2 | $R^1 = CF_3$, $R^3$ = Cl | Pyrimethanil |
| Nr. D:3 | $R^1 = CF_3$, $R^3 = CH_3$ | Pyrimethanil |
| Nr. D:4 | $R^1 = CF_3$, $R^3 = CF_3$ | Pyrimethanil |
| Nr. D:5 | $R^1 = CHF_2$; $R^3$ = F | Pyrimethanil |
| Nr. D:6 | $R^1 = CHF_2$; $R^3$ = Cl | Pyrimethanil |
| Nr. D.7 | $R^1 = CHF_2$; $R^3 = CH_3$ | Pyrimethanil |
| Nr. D.8 | $R^1 = CHF_2$; $R^3 = CF_3$ | Pyrimethanil |
| Nr. D.9 | $R^1 = CF_3$; $R^3$ = F | 5-Chlor-7-(4-methyl-piperidin-1-yl)-6-(2,4,6-trifluor-phenyl)-[1,2,4]triazolo[1,5-a]pyrimidin |
| Nr. D.10 | $R^1 = CF_3$; $R^3$ = Cl | 5-Chlor-7-(4-methyl-piperidin-1-yl)-6-(2,4,6-trifluor-phenyl)-[1,2,4]triazolo[1,5-a]pyrimidin |
| Nr. D.11 | $R^1 = CF_3$; $R^3 = CH_3$ | 5-Chlor-7-(4-methyl-piperidin-1-yl)-6-(2,4,6-trifluor-phenyl)-[1,2,4]triazolo[1,5-a]pyrimidin |
| Nr. D.12 | $R^1 = CF_3$; $R^3 = CF_3$ | 5-Chlor-7-(4-methyl-piperidin-1-yl)-6-(2,4,6-trifluor-phenyl)-[1,2,4]triazolo[1,5-a]pyrimidin |
| Nr. D.13 | $R^1 = CHF_2$; $R^3$ = F | 5-Chlor-7-(4-methyl-piperidin-1-yl)-6-(2,4,6-trifluor-phenyl)-[1,2,4]triazolo[1,5-a]pyrimidin |
| Nr. D.14 | $R^1 = CHF_2$; $R^3$ = Cl | 5-Chlor-7-(4-methyl-piperidin-1-yl)-6-(2,4,6-trifluor-phenyl)-[1,2,4]triazolo[1,5-a]pyrimidin |
| Nr. D.15 | $R^1 = CHF_2$; $R^3 = CH_3$ | 5-Chlor-7-(4-methyl-piperidin-1-yl)-6-(2,4,6-trifluor-phenyl)-[1,2,4]triazolo[1,5-a]pyrimidin |

(fortgesetzt)

| Wirkstoffkombinationen von Verbindungen I (X = Sauerstoff, $R^2$ = Wasserstoff) mit Wirkstoffen II der Gruppe D): | | |
|---|---|---|
| Mischung | Verbindungen der Formel I | Wirkstoff II |
| Nr. D.16 | $R^1$ = $CHF_2$; $R^3$ = $CF_3$ | 5-Chlor-7-(4-methyl-piperidin-1-yl)-6-(2,4,6-trifluor-phenyl)-[1,2,4]triazolo[1,5-a]pyrimidin |
| Nr. D.17 | $R^1$ = $CF_3$; $R^3$ = F | Dodemorph |
| Nr. D.18 | $R^1$ = $CF_3$; $R^3$ = Cl | Dodemorph |
| Nr. D.19 | $R^1$ = $CF_3$; $R^3$ = $CH_3$ | Dodemorph |
| Nr. D.20 | $R^1$ = $CF_3$; $R^3$ = $CF_3$ | Dodemorph |
| Nr. D.21 | $R^1$ = $CHF_2$; $R^3$ = F | Dodemorph |
| Nr. D.22 | $R^1$ = $CHF_2$; $R^3$ = Cl | Dodemorph |
| Nr. D.23 | $R^1$ = $CHF_2$; $R^3$ = $CH_3$ | Dodemorph |
| Nr. D.24 | $R^1$ = $CHF_2$; $R^3$ = $CF_3$ | Dodemorph |
| Nr. D.25 | $R^1$ = $CF_3$; $R^3$ = F | Fenpropimorph |
| Nr. D.26 | $R^1$ = $CF_3$; $R^3$ = Cl | Fenpropimorph |
| Nr. D.27 | $R^1$ = $CF_3$; $R^3$ = $CH_3$ | Fenpropimorph |
| Nr. D.28 | $R^1$ = $CF_3$; $R^3$ = $CF_3$ | Fenpropimorph |
| Nr. D.29 | $R^1$ = $CHF_2$; $R^3$ = F | Fenpropimorph |
| Nr. D.30 | $R^1$ = $CHF_2$; $R^3$ = Cl | Fenpropimorph |
| Nr. D.31 | $R^1$ = $CHF_2$; $R^3$ = $CH_3$ | Fenpropimorph |
| Nr. D.32 | $R^1$ = $CHF_2$; $R^3$ = $CF_3$ | Fenpropimorph |
| Nr. D.33 | $R^1$ = $CF_3$; $R^3$ = F | Tridemorph |
| Nr. D.34 | $R^1$ = $CF_3$; $R^3$ = Cl | Tridemorph |
| Nr. D.35 | $R^1$ = $CF_3$; $R^3$ = $CH_3$ | Tridemorph |
| Nr. D.36 | $R^1$ = $CF_3$; $R^3$ = $CF_3$ | Tridemorph |
| Nr. D.37 | $R^1$ = $CHF_2$; $R^3$ = F | Tridemorph |
| Nr. D.38 | $R^1$ = $CHF_2$; $R^3$ = Cl | Tridemorph |
| Nr. D.39 | $R^1$ = $CHF_2$; $R^3$ = $CH_3$ | Tridemorph |
| Nr. D.40 | $R^1$ = $CHF_2$; $R^3$ = $CF_3$ | Tridemorph |
| Nr. D.41 | $R^1$ = $CF_3$; $R^3$ = F | Iprodione |
| Nr. D.42 | $R^1$ = $CF_3$; $R^3$ = C) | Iprodione |
| Nr. D.43 | $R^1$ = $CF_3$; $R^3$ = $CH_3$ | Iprodione |
| Nr. D.44 | $R^1$ = $CF_3$; $R^3$ = $CF_3$ | Iprodione |
| Nr. D.45 | $R^1$ = $CHF_2$; $R^3$ = F | Iprodione |
| Nr. D.46 | $R^1$ = $CHF_2$; $R^3$ = Cl | Iprodione |
| Nr. D.47 | $R^1$ = $CHF_2$; $R^3$ = $CH_3$ | Iprodione |
| Nr. D.48 | $R^1$ = $CHF_2$; $R^3$ = $CF_3$ | Iprodione |
| Nr. D.49 | $R^1$ = $CF_3$; $R^3$ = F | Vinclozolin |
| Nr. D.50 | $R^1$ = $CF_3$; $R^3$ = Cl | Vinclozolin |

(fortgesetzt)

| Wirkstoffkombinationen von Verbindungen I (X = Sauerstoff, $R^2$ = Wasserstoff) mit Wirkstoffen II der Gruppe D): | | |
|---|---|---|
| Mischung | Verbindungen der Formel I | Wirkstoff II |
| Nr. D.51 | $R^1 = CF_3$; $R^3 = CH_3$ | Vinclozolin |
| Nr. D.52 | $R^1 = CF_3$; $R^3 = CF_3$ | Vinclozolin |
| Nr. D.53 | $R^1 = CHF_2$; $R^3 = F$ | Vinclozolin |
| Nr. D.54 | $R^1 = CHF_2$; $R^3 = Cl$ | Vinclozolin |
| Nr. D.55 | $R^1 = CHF_2$; $R^3 = CH_3$ | Vinclozolin |
| Nr. D.56 | $R^1 = CHF_2$; $R^3 = CF_3$ | Vinclozolin |

Tabelle 6

| Wirkstoffkombinationen von Verbindungen I mit Wirkstoffen II der Gruppe E): | | |
|---|---|---|
| Mischung | Verbindungen der Formel I (X = O, $R^2$ = H) | Wirkstoff II |
| Nr. E.1 | $R^1 = CF_3$; $R^3 = F$ | Mancozeb |
| Nr. E.2 | $R^1 = CF_3$; $R^3 = Cl$ | Mancozeb |
| Nr. E.3 | $R^1 = CF_3$; $R^3 = CH_3$ | Mancozeb |
| Nr. E.4 | $R^1 = CF_3$; $R^3 = CF_3$ | Mancozeb |
| Nr. E.5 | $R^1 = CHF_2$; $R^3 = F$ | Mancozeb |
| Nr. E.6 | $R^1 = CHF_2$; $R^3 = Cl$ | Mancozeb |
| Nr. E.7 | $R^1 = CHF_2$; $R^3 = CH_3$ | Mancozeb |
| Nr. E.8 | $R^1 = CHF_2$; $R^3 = CF_3$ | Mancozeb |
| Nr. E.9 | $R^1 = CF_3$; $R^3 = F$ | Metiram |
| Nr. E.10 | $R^1 = CF_3$; $R^3 = Cl$ | Metiram |
| Nr. E.11 | $R^1 = CF_3$; $R^3 = CH_3$ | Metiram |
| Nr. E.12 | $R^1 = CF_3$; $R^3 = CF_3$ | Metiram |
| Nr. E.13 | $R^1 = CHF_2$; $R^3 = F$ | Metiram |
| Nr. E.14 | $R^1 = CHF_2$; $R^3 = Cl$ | Metiram |
| Nr. E.15 | $R^1 = CHF_2$; $R^3 = CH_3$ | Metiram |
| Nr. E.16 | $R^1 = CHF_2$; $R^3 = CF_3$ | Metiram |

Tabelle 7

| Wirkstoffkombinationen von Verbindungen I mit Wirkstoffen II der Gruppe F): | | |
|---|---|---|
| Mischung | Verbindungen der Formel I (X = O, $R^2$ = H) | Wirkstoff II |
| Nr. F.1 | $R^1 = CF_3$; $R^3 = F$ | Chlorthalonil |
| Nr. F.2 | $R^1 = CF_3$; $R^3 = Cl$ | Chlorthalonil |
| Nr. F.3 | $R^1 = CF_3$, $R^3 = CH_3$ | Chlorthalonil |
| Nr. F.4 | $R^1 = CF_3$, $R^3 = CF_3$ | Chlorthalonil |
| Nr. F.5 | $R^1 = CHF_2$; $R^3 = F$ | Chlorthalonil |
| Nr. F.6 | $R^1 = CHF_2$; $R^3 = Cl$ | Chlorthalonil |

(fortgesetzt)

| Wirkstoffkombinationen von Verbindungen I mit Wirkstoffen II der Gruppe F): | | |
|---|---|---|
| Mischung | Verbindungen der Formel I ($X = O$, $R^2 = H$) | Wirkstoff II |
| Nr. F.7 | $R^1 = CHF_2$; $R^3 = CH_3$ | Chlorthalonil |
| Nr. F.8 | $R^1 = CHF_2$; $R^3 = CF_3$ | Chlorthalonil |
| Nr. F.9 | $R^1 = CF_3$, $R^3 = F$ | Metrafenone |
| Nr. F.10 | $R^1 = CF_3$, $R^3 = Cl$ | Metrafenone |
| Nr. F.11 | $R^1 = CF_3$, $R^3 = CH_3$ | Metrafenone |
| Nr. F.12 | $R^1 = CF_3$, $R^3 = CF_3$ | Metrafenone |
| Nr. F.13 | $R^1 = CHF_2$; $R^3 = F$ | Metrafenone |
| Nr. F.14 | $R^1 = CHF_2$; $R^3 = Cl$ | Metrafenone |
| Nr. F.15 | $R^1 = CHF_2$; $R^3 = CH_3$ | Metrafenone |
| Nr. F.16 | $R^1 = CHF_2$; $R^3 = CF_3$ | Metrafenone |
| Nr. F.17 | $R^1 = CF_3$; $R^3 = F$ | Phosphorige Säure |
| Nr. F.18 | $R^1 = CF_3$; $R^3 = Cl$ | Phosphorige Säure |
| Nr. F.19 | $R^1 = CF_3$; $R^3 = CH_3$ | Phosphorige Säure |
| Nr. F.20 | $R^1 = CF_3$; $R^3 = CF_3$ | Phosphorige Säure |
| Nr. F.21 | $R^1 = CHF_2$; $R^3 = F$ | Phosphorige Säure |
| Nr. F.22 | $R^1 = CHF_2$; $R^3 = Cl$ | Phosphorige Säure |
| Nr. F.23 | $R^1 = CHF_2$; $R^3 = CH_3$ | Phosphorige Säure |
| Nr. F.24 | $R^1 = CHF_2$; $R^3 = CF_3$ | Phosphorige Säure |

Die Mischungen aus der Verbindung I mit mindestens einem der Wirkstoffe II, bzw. die gleichzeitige gemeinsame oder getrennte Verwendung einer Verbindung I mit mindestens einem der Wirkstoffe II, zeichnen sich aus durch eine hervorragende Wirksamkeit gegen ein breites Spektrum von pflanzenpathogenen Pilzen, insbesondere aus der Klasse der *Ascomyceten, Basidiomyceten, Deuteromyceten* und *Peronosporomyceten* (syn. *Oomyceten*). Sie sind zum Teil systemisch wirksam und können im Pflanzenschutz als Blatt-, Beiz- und Bodenfungizide eingesetzt werden.

Besondere Bedeutung haben sie für die Bekämpfung einer Vielzahl von Pilzen an verschiedenen Kulturpflanzen wie Weizen, Roggen, Gerste, Hafer, Reis, Mais, Gras, Bananen, Baumwolle, Soja, Kaffee, Zuckerrohr, Wein, Obst- und Zierpflanzen und Gemüsepflanzen wie Gurken, Bohnen, Tomaten, Kartoffeln und Kürbissen, sowie an den Samen dieser Pflanzen.

Speziell eignen sie sich zur Bekämpfung folgender Pflanzenkrankheiten:

- *Alternaria* Arten an Gemüse, Raps, Zuckerrüben und Obst und Reis (z.B. *A. solani* oder *A. alternata* an Kartoffel und anderen Pflanzen),
- Aphanomyces Arten an Zuckerrüben und Gemüse,
- *Bipolaris*- und *Drechslera* Arten an Mais, Getreide, Reis und Rasen (z.B. *D. teres* an Gerste, *D. tritci-repentis* an Weizen),
- *Blumeria graminis* (Echter Mehltau) an Getreide,
- *Botrytis* cinerea (Grauschimmel) an Erdbeeren, Gemüse, Blumen und Weinreben,
- *Bremia lactucae* an Salat,
- Cercospora Arten an Mais, Sojabohnen, Reis und Zuckerrüben (z.B. *C. beticula* an Zuckerrüben),
- *Cochliobolus* Arten an Mais, Getreide, Reis (z.B. *Cochliobolus sativus* an Getreide, *Cochliobolus miyabeanus* an Reis),
- *Colletotricum* Arten an Sojabohnen, Baumwolle und anderen Pflanzen (z.B. C. *acutatum* an verschiedenen Pflanzen),
- *Exserohilum* Arten an Mais,
- *Erysiphe* cichoracearumund Sphaerotheca *fuliginea* an Gurkengewächsen,

- *Fusarium* und *Verticillium* Arten (z.B. *V. dahliae)* an verschiedenen Pflanzen (z.B. *F. graminearum* an Weizen),
- Gaeumanomyces *graminis* an Getreide,
- *Gibberella* Arten an Getreide und Reis (z.B. *Gibberella fujikuroi* an Reis),
- *Grainstaining complex* an Reis,
- *Helminthosporium* Arten (z.B. *H. graminicola)* an Mais und Reis,
- *Michrodochium nivale* an Getreide,
- *Mycosphaerella* Arten an Getreide, Bananen und Erdnüssen (*M. graminicola* an Weizen, *M. fijiesis* an Banane),
- *Phakopsara pachyrhizi* und *Phakopsara meibomiae* an Sojabohnen,
- *Phomopsis* Arten an Sojabohnen, Sonnenblumen und Weinreben (*P. viticola* an Weinreben, *P. helianthii* an Sonnenblumen),
- *Phytophthora infestans* an Kartoffeln und Tomaten,
- *Plasmopara viticola* an Weinreben,
- *Podosphaera leucotricha* an Apfel,
- *Pseudocercosporella herpotrichoides* an Getreide,
- Pseudoperonospora Arten an Hopfen und Gurkengewächsen (z.B. *P. cubenis* an Gurke),
- *Puccinia* Arten an Getreide, Mais und Spargel (*P. triticina und P. striformis an Weizen, P. asparagi* an Spargel),
- *Pyrenophora* Arten an Getreide,
- *Pyricularia oryzae, Corticium sasakii, Sarocladium oryzae, S.attenuatum, Entyloma oryzae* an Reis,
- *Pyricularia grisea* an Rasen und Getreide,
- *Pythium spp.* an Rasen, Reis, Mais, Baumwolle, Raps, Sonnenblumen, Zuckerrüben, Gemüse und anderen Pflanzen,
- *Rhizoctonia-Arten* (z.B. *R. solani*) an Baumwolle, Reis, Kartoffeln, Rasen, Mais, Raps, Kartoffeln, Zuckerrüben, Gemüse und anderen Pflanzen,
- *Sclerotinia* Arten (z.B. *S. sclerotiorum*) an Raps, Sonnenblumen und anderen Pflanzen,
- *Septoria tritici* und *Stagonospora nodorum* an Weizen,
- *Erysiphe* (syn. *Uncinulanecator*) an Weinrebe,
- Setospaeria Arten an Mais und Rasen,
- *Sphacelotheca reilinia* an Mais,
- *Thievaliopsis* Arten an Sojabohnen und Baumwolle,
- *Tilletia Arten* an Getreide,
- *Ustilago* Arten an Getreide, Mais und Zuckerrübe und
- *Venturia* Arten (Schorf) an Apfel und Birne (z.B. *V. inaequalis* an Apfel).

Die erfindungsgemäßen Mischungen eignen sich außerdem zur Bekämpfung von Schadpilzen im Materialschutz (z.B. Holz, Papier, Dispersionen für den Anstrich, Fasern bzw. Gewebe) und im Vorratsschutz. Im Holzschutz finden insbesondere folgende Schadpilze Beachtung: Ascomyceten wie *Ophiostoma* spp., *Ceratocystis* spp., *Aureobasidium pullulans,* Sclerophoma spp., *Chaetomium* spp., *Humicola* spp., *Petriella* spp., *Trichurus* spp.; Basidiomyceten wie *Coniophora* spp., *Coriolus* spp., *Gloeophyllum* spp., *Lentinus* spp., *Pleurotus* spp., *Poria* spp., *Serpula* spp. und *Tyromyces* spp., Deuteromyceten wie *Aspergillus* spp., *Cladosporium* spp., *Penicillium* spp., *Trichoderma* spp., *Alternaria* spp., *Paecilomyces* spp. und Zygomyceten wie *Mucor spp.,* darüber hinaus im Materialschutz folgende Hefepilze: *Candida* spp. und *Saccharomyces cerevisae.*
Die Mischungen aus einer Verbindung I und eines Wirkstoffs II eignen sich insbesondere zur Bekämpfung von *Botrytis* Arten.
Die Verbindung I mit mindestens einem der Wirkstoffe II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.
Bevorzugt setzt man bei der Bereitstellung der Mischungen die reinen Wirkstoffe I und
II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.
Üblicherweise kommen Mischungen aus Verbindung I und einem Wirkstoff II zur Anwendung. Unter Umständen können jedoch auch Mischungen der Verbindung I mit zwei oder ggf. mehreren Aktivkomponenten vorteilhaft sein.
Als weitere Aktivkomponenten im voranstehenden Sinne kommen besonders die eingangs genannten Wirkstoffe II und insbesondere die voranstehend genannten bevorzugten Wirkstoffe II in Frage.
Die Verbindung I und der Wirkstoff II werden üblicherweise in einem Gewichtsverhältnis von 100:1 bis 1:100, vorzugsweise 20:1 bis 1:20, insbesondere 10:1 bis 1:10 angewandt.
Die weiteren Aktivkomponenten werden gewünschtenfalls im Verhältnis von 20:1 bis 1:20 zu der Verbindung I zugemischt.
Die Aufwandmengen der erfindungsgemäßen Mischungen liegen, vor allem bei landwirtschaftlichen Kulturflächen, je nach Art der Verbindung und des gewünschten Effekts bei 5 g/ha bis 2000 g/ha, vorzugsweise 20 bis 1500 g/ha, insbesondere 50 bis 1000 g/ha.

Die Aufwandmengen für die Verbindung I liegen entsprechend in der Regel bei 1 bis 1000 g/ha, vorzugsweise 10 bis 900 g/ha, insbesondere 20 bis 750 g/ha.

Die Aufwandmengen für den Wirkstoff 11 liegen entsprechend in der Regel bei 1 bis 2000 g/ha, vorzugsweise 10 bis 1500 g/ha, insbesondere 40 bis 1000 g/ha.

Bei der Saatgutbehandlung werden im allgemeinen Aufwandmengen an Mischung von 1 bis 1000 g/100 kg Saatgut, vorzugsweise 1 bis 750 g/100 kg, insbesondere 5 bis 500 g/100 kg verwendet.

Das Verfahren zur Bekämpfung von Schadpilzen erfolgt durch die getrennte oder gemeinsame Applikation von Verbindung I und Wirkstoffs II oder einer Mischung aus Verbindung I und Wirkstoffs II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen Mischungen, bzw. die Verbindung I und der Wirkstoff II können in die üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Verbindung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im wesentlichen in Betracht:

- Wasser, aromatische Lösungsmittel (z.B. Solvesso® Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (N-Methylpyrrolidon, NOP), Acetate (Glykoldiacetat), Glykole, Dimethylfettsäureamide, Fettsäuren und Fettsäureester. Grundsätzlich können auch Lösungsmittelgemische verwendet werden,
- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Lignin-Sulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Pulver-, Streu- und Stäubmittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen zwischen 0,01 und 95 Gew.-%, vorzugsweise zwischen 0,1 und 90 Gew.-% der Wirkstoffe. Die Wirkstoffe werden dabei in einer Reinheit von 90% bis 100%, vorzugsweise 95% bis 100% (nach NMR-Spektrum) eingesetzt.

Beispiele für Formulierungen sind: 1. Produkte zur Verdünnung in Wasser

A) Wasserlösliche Konzentrate (SL)

10 Gew.-Teile einer erfindungsgemäßen Mischung werden mit 90 Gew.-Teilen Wasser oder einem wasserlöslichen Lösungsmittel gelöst. Alternativ werden Netzmittel oder andere Hilfsmittel zugefügt. Bei der Verdünnung in Wasser löst sich der Wirkstoff. Man erhält auf diese Weise eine Formulierung mit einem Wirkstoffgehalt von 10 Gew.-%.

B) Dispergierbare Konzentrate (DC)

20 Gew.-Teile einer erfindungsgemäßen Mischung werden in 70 Gew.-Teilen Cyclohexanon unter Zusatz von 10 Gew.-Teilen eines Dispergiermittels z.B. Polyvinylpyrrolidon gelöst. Bei Verdünnung in Wasser ergibt sich eine Dispersion. Der Wirkstoffgehalt beträgt 20 Gew.-%

C) Emulgierbare Konzentrate (EC)

15 Gew.-Teile einer erfindungsgemäßen Mischung werden in 75 Gew.-Teilen Xylol unter Zusatz von Ca-Dodecylbenzolsulfonat und Ricinusölethoxylat (jeweils 5 Gew.-Teile) gelöst. Bei der Verdünnung in Wasser ergibt sich eine Emulsion. Die Formulierung hat einen Wirkstoffgehalt von 15 Gew.-%.

D) Emulsionen (EW, EO)

25 Gew.-Teile einer erfindungsgemäßen Mischung werden in 35 Gew.-Teilen Xylol unter Zusatz von Ca-Dodecylbenzolsulfonat und Ricinusölethoxylat (jeweils 5 Gew.-Teile) gelöst. Diese Mischung wird mittels einer Emulgiermaschine (z.B. Ultraturax) in 30 Gew.Teile Wasser gegeben und zu einer homogenen Emulsion gebracht. Bei der Verdünnung in Wasser ergibt sich eine Emulsion. Die Formulierung hat einen Wirkstoffgehalt von 25 Gew.-%.

E) Suspensionen (SC, OD)

20 Gew.-Teile einer erfindungsgemäßen Mischung werden unter Zusatz von 10 Gew.-Teilen Dispergier- und Netzmitteln und 70 Gew.-Teilen Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs. Der Wirkstoffgehalt in der Formulierung beträgt 20 Gew.-% .

F) Wasserdispergierbare und wasserlösliche Granulate (WG, SG)

50 Gew.-Teile einer erfindungsgemäßen Mischung werden unter Zusatz von 50 Gew-Teilen Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs. Die Formulierung hat einen Wirkstoffgehalt von 50 Gew.-%.

G) Wasserdispergierbare und wasserlösliche Pulver (WP, SP)

75 Gew.-Teile einer erfindungsgemäßen Mischung werden unter Zusatz von 25 Gew.-Teilen Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs. Der Wirkstoffgehalt der Formulierung beträgt 75 Gew.-%.

2. Produkte für die Direktapplikation

H) Stäube (DP)

5 Gew.-Teile einer erfindungsgemäßen Mischung werden fein gemahlen und mit 95 Gew.-Teilen feinteiligem Kaolin innig vermischt. Man erhält dadurch ein Stäubemittel mit einem Wirkstoffgehalt von 5 Gew.-%.

J) Granulate (GR, FG, GG, MG)

0,5 Gew-Teile einer erfindungsgemäßen Mischung werden fein gemahlen und mit 99,5 Gew.-Teilen Trägerstoffe verbunden. Gängige Verfahren sind dabei die Extrusion, die Sprühtrocknung oder die Wirbelschicht. Man erhält dadurch ein Granulat für die Direktapplikation mit einem Wirkstoffgehalt von 0,5 Gew.-%.

K) ULV- Lösungen (UL)

10 Gew.-Teile einer erfindungsgemäßen Mischung werden in 90 Gew.-Teilen eines organischen Lösungsmittel z.B. Xylol gelöst. Dadurch erhält man ein Produkt für die Direktapplikation mit einem Wirkstoffgehalt von 10 Gew.-%.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, gegebenenfalls auch erst unmittelbar vor der Anwendung (Tankmix), zugesetzt werden. Diese Mittel werden üblicherweise zu den erfindungsgemäßen Mitteln im Gewichtsverhältnis 1:100 bis 100:1, bevorzugt 1:10 bis 10:1, zugemischt.

Als Adjuvants in diesem Sinne kommen insbesondere in Frage: organisch modifizierte Polysiloxane, z.B. Break Thru S 240®; Alkoholalkoxylate, z. B. Atplus 245®, Atplus MBA 1303®, Plurafac LF 300® und Lutensol ON 30®; EO-PO-Blockpolymerisate, z. B. Pluronic RPE 2035® und Genapol B®; Alkoholethoxylate, z. B. Lutensol XP 80®; und Natriumdioctylsulfosuccinat, z. B. Leophen RA®.

Die Verbindungen I und II, bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Die fungizide Wirkung der Einzelverbindungen und der erfindungsgemäßen Mischungen ließ sich durch die folgenden Versuche zeigen.

Die Wirkstoffe wurden getrennt oder gemeinsam als eine Stammlösung aufbereitet mit 25 mg Wirkstoff, welcher mit einem Gemisch aus Aceton und/oder Dimethylsulfoxid und dem Emulgator Uniperol® EL (Netzmittel mit Emulgier- und Dispergierwirkung auf der Basis ethoxylierter Alkylphenole) im Volumen-Verhältnis Lösungsmittel-Emulgator von 99 zu 1 ad 10 ml aufgefüllt wurde. Anschließend wurde ad 100 ml mit Wasser aufgefüllt. Diese Stammlösung wurde mit dem beschriebenen Lösungsmittel-Emulgator-Wasser Gemisch zu der unten angegeben Wirkstoffkonzentration verdünnt.

Die visuell ermittelten Werte für den Prozentanteil befallener Blattflächen wurden in Wirkungsgrade als % der unbehandelten Kontrolle umgerechnet:

Der Wirkungsgrad (W) wird nach der Formel von Abbot wie folgt berechnet:

$$W = (1 - \alpha/\beta) \cdot 100$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Anwendungsbeispiel - Wirksamkeit gegen *Botrytis* cinerea an Paprika

Paprikasämlinge der Sorte "Neusiedler Ideal Elite" wurden, nachdem sich 4 - 5 Blätter gut entwickelt hatten, mit einer wässrigen Wirkstoffaufbereitung, die aus einer Stammlösung aus 10% Wirkstoff, 63% Cyclohexanon und 27% Emulgiermittel angesetzt wurde, bis zur Tropfnässe besprüht. Am nächsten Tag wurden die behandelten Pflanzen mit einer Sporensuspension von *Botrytis* cinerea, die $1{,}7 \times 10^6$ Sporen/ml in einer 2%igen Biomalzlösung enthielt, inokuliert. Anschließend wurden die Versuchspflanzen in eine Klimakammer mit 22 bis 24°C und hoher Luftfeuchtigkeit gestellt. Nach 5 Tagen konnte das Ausmaß des Pilzbefalls auf den Blättern visuell in % ermittelt werden.

Aus den Ergebnissen der Versuche geht hervor, dass die erfindungsgemäßen Mischungen aufgrund des Synergismus' erheblich besser wirksam sind, als nach der Colby-Formel vorausberechnet.

## Patentansprüche

**1.** Fungizide Mischungen zur Bekämpfung von pflanzenpathogenen Schadpilzen, enthaltend

1) 1-Methyl-pyrazol-4-ylcarbonsäureanilide der Formel I

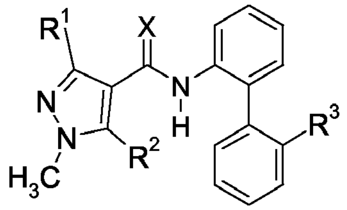

I,

in der die Variablen folgende Bedeutungen haben:

X Sauerstoff oder Schwefel;
$R^1$ Halogen, $C_1$-$C_4$-Alkyl oder $C_1$-$C_4$-Halogenalkyl;
$R^2$ Wasserstoff oder Halogen; und
$R^3$ Nitro, Cyano, Halogen, $C_1$-$C_4$-Alkyl, $C_1$-$C_4$-Halogenalkyl, $C_1$-$C_4$-Alkoxy, $C_1$-$C_4$-Halogenalkoxy oder $C_1$-$C_4$-Alkylthio;

und
2) mindestens einen Wirkstoff II, ausgewählt aus den Wirkstoffgruppen A) bis L):

A) Azole, ausgewählt aus Bitertanol, Bromuconazol, Cyproconazol, Difenoconazol, Diniconazol, Enilconazol, Epoxiconazol, Fluquinconazol, Fenbuconazol, Flusilazol, Flutriafol, Hexaconazol, Imibenconazol, Ipconazol, Metconazol, Myclobutanil, Penconazol, Propiconazol, Prothioconazol, Simeconazol, Triadimefon, Triadimenol, Tebuconazol, Tetraconazol, Triticonazol, Prochloraz, Pefurazoate, Imazalil, Triflumizol, Cyazofamid, Benomyl, Carbendazim, Thiabendazol, Fuberidazol, Ethaboxam, Etridiazol und Hymexazol;
B) Strobilurine, ausgewählt aus Azoxystrobin, Dimoxystrobin, Enestroburin, Fluoxastrobin, Kresoxim-methyl, Methominostrobin, Orysastrobin, Picoxystrobin, Pyraclostrobin, Trifloxystrobin, Enestroburin, (2-Chlor-5-[1-(3-methyl-benzyloxyimino)-ethyl]-benzyl)-carbaminsäuremethylester, (2-Chlor-5-[1-(6-methyl-pyridin-2-ylmethoxyimino)-ethyl]-benzyl)-carbaminsäuremethylester und 2-(ortho-(2,5-Dimethylphenyl-oxymethylen)phenyl)-3-methoxy-acrylsäuremethylester;

C) Carbonsäureamide, ausgewählt aus Carboxin, Benalaxyl, Boscalid, Fenhexamid, Flutolanil, Furametpyr, Mepronil, Metalaxyl, Mefenoxam, Ofurace, Oxadixyl, Oxycarboxin, Penthiopyrad, Thifluzamid, Tiadinil, 3,4-Dichlor-N-(2-cyanophenyl)-isothiazol-5-carbonsäureamid, Penthiopyrad, Dimethomorph, Flumorph, Flumetover, Fluopicolid (Picobenzamid), Zoxamid, Carpropamid, Diclocymet, Mandipropamid, N-(2-(4-[3-(4-Chlor-phenyl)-prop-2-ynyloxy]-3-methoxy-phenyl)-ethyl)-2-methanesulfonylamino-3-methyl-butyramid, N-(2-(4-[3-(4-Chlorphenyl)-prop-2-ynyloxy]-3-methoxy-phenyl)-ethyl)-2-ethansulfonylamino-3-methyl-butyramid, 4-Difluormethyl-2-methyl-thiazol-5-carbonsäure-(4'-brom-biphenyl-2-yl)-amid, 4-Difluormethyl-2-methylthiazol-5-carbonsäure-(4'-trifluormethyl-biphenyl-2-yl)-amid, 4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid und 3,4-Dichlor-isothiazol-5-carbonsäure-(2-cyano-phenyl)amid;

D) Heterocyclische Verbindungen, ausgewählt aus Fluazinam, Pyrifenox, Bupirimat, Cyprodinil, Fenarimol, Ferimzon, Mepanipyrim, Nuarimol, Pyrimethanil, Triforin, Fenpiclonil, Fludioxonil, Aldimorph, Dodemorph, Fenpropimorph, Tridemorph, Fenpropidin, Iprodion, Procymidon, Vinclozolin, Famoxadon, Fenamidon, Octhilinon, Probenazol, 5-Chlor-7-(4-methyl-piperidin-1-yl)-6-(2,4,6-trifluor-phenyl)-[1,2,4]triazolo[1,5-a]pyrimidin, Anilazin, Diclomezin, Pyroquilon, Proquinazid, Tricyclazol, die

Verbindung der Formel III (2-Butoxy-6-iodo-3-propyl-chromen-4-on)

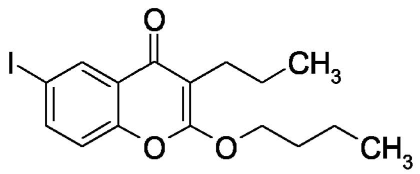

III,

Acibenzolar-S-methyl, Captafol, Captan, Dazomet, Folpet, Fenoxanil, Quinoxyfen und 3-(3-Brom-6-fluor-2-methyl-indol-1-sulfonyl)-[1,2,4]triazol-1-sulfonsäuredimethylamid ;

E) Carbamate, ausgewählt aus Mancozeb, Maneb, Metam, Metiram, Ferbam, Propineb, Thiram, Zineb, Ziram,

Diethofencarb, Iprovalicarb, Flubenthiavalicarb, Propamocarb, N-(1-(1-(4-cyanophenyl)ethanesulfonyl)-but-2-yl)carbaminsäure-(4-fluorphenyl)ester, 3-(4-Chlor-phenyl)-3-(2-isopropoxycarbonylamino-3-methyl-butyrylamino)-propansäuremethylester und Carbamatoximether der Formel IV

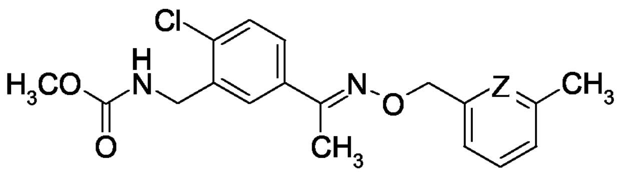

IV,

in der Z für N oder CH steht;

F) Sonstige Fungizide, ausgewählt aus

Guanidin, Dodin, Iminoctadin, Guazatin,

Antibiotika: Kasugamycin, Streptomycin, Polyoxin, Validamycin A, Nitrophenylderivate: Binapacryl, Dinocap, Dinobuton,

Schwefelhaltige Heterocyclylverbindungen: Dithianon, Isoprothiolan, Organometallverbindungen: Fentin Salze,

Organophosphorverbindungen: Edifenphos, Iprobenfos, Fosetyl,

Fosetyl-Aluminium, Phosphorige Säure und ihre Salze, Pyrazophos, Tolclofos-methyl,

Organochlorverbindungen: Chlorothalonil, Dichlofluanid, Flusulfamid, Hexachlorbenzol, Phthalid, Pencycuron, Quintozen, Thiophanat-Methyl, Tolylfluanid,

Anorganische Wirkstoffe: Bordeaux Brühe, Kupferacetat,

Kupferhydroxid, Kupferoxychlorid, basisches Kupfersulfat, Schwefel, Sonstige: Cyflufenamid, Cymoxanil, Dimethirimol, Ethirimol,

Furalaxyl, Metrafenon und Spiroxamin;

in einer synergistisch wirksamen Menge.

2. Fungizide Mischungen nach Anspruch 1, enthaltend als Komponente 1) ein 1-Methyl-pyrazol-4-ylcarbonsäureanilid der Formel I, wobei X für Sauerstoff, $R^1$ für Methyl, Difluormethyl oder Trifluormethyl, $R^2$ für Wasserstoff, Fluor oder Chlor und $R^3$ für Fluor, Chlor, Methyl, Trifluormethyl, Methoxy, Difluormethoxy, Trifluormethoxy oder Methylthio stehen.

3. Fungizide Mischungen nach Anspruch 1, enthaltend als Komponente 1) ein 1-Methyl-pyrazol-4-ylcarbonsäureanilid der Formel I, wobei X für Schwefel, $R^1$ für Methyl, Difluormethyl oder Trifluormethyl, $R^2$ für Wasserstoff, Fluor oder Chlor und $R^3$ für Fluor, Chlor, Methyl, Trifluormethyl, Methoxy, Difluormethoxy, Trifluormethoxy oder Methylthio stehen.

4. Fungizide Mischungen nach Anspruch 1, enthaltend als Wirkstoff I
1-Methyl-3-trifluormethyl-pyrazol-4-ylcarbonsäure-N-(2'-fl uor-biphen-2-yl)-amid,
1-Methyl-3-trifluormethyl-pyrazol-4-ylcarbonsäure-N-(2'-chlor-biphenyl-2-yl)-amid,
1-Methyl-3-trifluormethyl-pyrazol-4-ylcarbonsäure-N-(2'-methyl-biphen-2-yl)-amid,
1-Methyl-3-trifl uormethyl-pyrazol-4-ylcarbonsäure-N-(2'-trifluormethyl-biphen-2-yl)-amid, 3-Difluormethyl-1-methyl-pyrazol-4-ylcarbonsäure-N-(2'-fluor-biphen-2-yl)-amid, 3-Difluormethyl-1-methyl-pyrazol-4-ylcarbonsäure-N-(2'-chlor-biphenyl-2-yl)-amid, 3-Difluormethyl-1-methyl-pyrazol-4-ylcarbonsäure-N-(2'-methyl-biphen-2-yl)-amid und 3-Difluormethyl-1-methyl-pyrazol-4-ylcarbonsäure-N-(2'-trifluormethyl-biphen-2-yl)-amid.

5. Fungizide Mischungen nach den Ansprüchen 1 bis 4, enthaltend die Verbindung der Formel I und die Verbindung der Formel II in einem Gewichtsverhältnis von 100:1 bis 1:100.

6. Mittel, enthaltend einen flüssigen oder festen Trägerstoff und eine Mischung gemäß den Ansprüchen 1 bis 4.

7. Verfahren zur Bekämpfung von pflanzenpathogenen Schadpilzen, **dadurch gekennzeichnet, dass** man die Pilze, deren Lebensraum oder die vor Pilzbefall zu schützenden Pflanzen, den Boden, Saatgüter, Flächen, Materialien oder Räume mit einer wirksamen Menge mindestens einer Verbindung I und mindestens einer Verbindung II gemäß den Ansprüchen 1 bis 4 behandelt.

8. Verfahren nach Anspruch 7, **dadurch gekennzeichnet, dass** man die Komponenten 1) und 2) gemäß den Ansprüchen 1 bis 4 gleichzeitig, und zwar gemeinsam oder getrennt, oder nacheinander ausbringt.

9. Verfahren nach Anspruch 7 oder 8, **dadurch gekennzeichnet, dass** man die Komponenten 1) und 2) gemäß den Ansprüchen 1 bis 4 in einer Menge von 5 g/ha bis 2000 g/ha aufwendet.

10. Verfahren nach Anspruch 7 oder 8, **dadurch gekennzeichnet, dass** man die Komponenten 1) und 2) gemäß den Ansprüchen 1 bis 4 in einer Menge von 1 g bis 1000 g pro 100 kg Saatgut anwendet.

11. Saatgut, enthaltend die Mischung gemäß den Ansprüchen 1 bis 4 in einer Menge von 1 g bis 1000 g pro 100 kg Saatgut.

12. Verwendung der Verbindungen I und II gemäß den Ansprüchen 1 bis 4 zur Herstellung eines zur Bekämpfung von Schadpilzen geeigneten Mittels.

Europäisches Patentamt

# EUROPÄISCHER RECHERCHENBERICHT

Nummer der Anmeldung
EP 06 10 0901

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 99/31951 A (BASF AKTIENGESELLSCHAFT; SCHELBERGER, KLAUS; SCHERER, MARIA; EICKEN, K) 1. Juli 1999 (1999-07-01)<br>* Seite 4, Zeilen 20-45 *<br>* Seite 11, Zeile 1 - Seite 12, Zeile 2 *<br>* Seite 13, Zeilen 30-40 *<br>* Seite 15, Zeilen 43-45 *<br>----- | 1-12 | INV.<br>A01N43/56 |
| Y | WO 99/31976 A (BASF AKTIENGESELLSCHAFT; SCHELBERGER, KLAUS; SCHERER, MARIA; EICKEN, K) 1. Juli 1999 (1999-07-01)<br>* Seite 11, Zeilen 41-45 *<br>* Seite 15, Zeile 25 - Seite 16, Zeile 10 *<br>* Seite 17, Zeilen 26-28 *<br>* Seite 9, Zeile 33 - Seite 10, Zeile 39 *<br>----- | 1-12 | |
| Y | WO 99/31979 A (BASF AKTIENGESELLSCHAFT; SCHELBERGER, KLAUS; SCHERER, MARIA; EICKEN, K) 1. Juli 1999 (1999-07-01)<br>* Seite 5, Zeile 40 - Seite 6, Zeile 19 *<br>* Seite 12, Zeile 11 - Seite 13, Zeile 12 *<br>* Seite 13, Zeilen 40-45 *<br>* Seite 16, Zeilen 1-4 *<br>----- | 1-12 | RECHERCHIERTE SACHGEBIETE (IPC)<br>A01N |
| Y | WO 99/31981 A (BASF AKTIENGESELLSCHAFT; SCHELBERGER, KLAUS; SCHERER, MARIA; EICKEN, K) 1. Juli 1999 (1999-07-01)<br>* Seite 1, Zeile 8 - Seite 3, Zeile 26 *<br>* Seite 4, Zeilen 21-39 *<br>* Seite 10, Zeile 26 - Seite 11, Zeile 37 *<br>* Seite 12, Zeile 20 - Seite 13, Zeile 40 *<br>* Seite 15, Zeilen 43-45 *<br>-----<br>-/-- | 1-12 | |

Der vorliegende Recherchenbericht wurde für alle Patentansprüche erstellt

| Recherchenort | Abschlußdatum der Recherche | Prüfer |
|---|---|---|
| München | 17. Juli 2006 | Romano-Götsch, R |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 06 10 0901

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 99/31983 A (BASF AKTIENGESELLSCHAFT; SCHELBERGER, KLAUS; SCHERER, MARIA; EICKEN, K) 1. Juli 1999 (1999-07-01)<br>* Seite 2, Zeilen 13-26 *<br>* Seite 8, Zeile 17 - Seite 9, Zeile 36 *<br>* Seite 10, Zeilen 13-17 *<br>* Seite 12, Zeilen 19-21 *<br>----- | 1-12 | |
| Y | WO 99/31984 A (BASF AKTIENGESELLSCHAFT; SCHELBERGER, KLAUS; SCHERER, MARIA; EICKEN, K) 1. Juli 1999 (1999-07-01)<br>* Seite 8, Zeile 1 - Seite 9, Zeile 2 *<br>* Seite 9, Zeile 29 - Seite 10, Zeile 46 *<br>* Seite 13, Zeilen 1-3 *<br>----- | 1-12 | |
| Y | WO 99/31985 A (BASF AKTIENGESELLSCHAFT; SCHELBERGER, KLAUS; SCHERER, MARIA; EICKEN, K) 1. Juli 1999 (1999-07-01)<br>* Seite 2, Zeilen 5-12 *<br>* Seite 8, Zeile 1 - Seite 9, Zeile 2 *<br>* Seite 9, Zeilen 25-30 *<br>* Seite 11, Zeilen 30-48 *<br>----- | 1-12 | RECHERCHIERTE SACHGEBIETE (IPC) |
| Y | WO 99/31986 A (BASF AKTIENGESELLSCHAFT; SCHELBERGER, KLAUS; SCHERER, MARIA; EICKEN, K) 1. Juli 1999 (1999-07-01)<br>* Seite 2, Zeile 35 - Seite 3, Zeile 25 *<br>* Seite 8, Zeilen 20-22 *<br>* Seite 9, Zeile 4 - Seite 10, Zeile 9 *<br>* Seite 11, Zeilen 5-15 *<br>* Seite 13, Zeilen 1-22 *<br>----- | 1-12 | |

Der vorliegende Recherchenbericht wurde für alle Patentansprüche erstellt

| Recherchenort | Abschlußdatum der Recherche | Prüfer |
|---|---|---|
| München | 17. Juli 2006 | Romano-Götsch, R |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 06 10 0901

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-07-2006

| Im Recherchenbericht angeführtes Patentdokument | Datum der Veröffentlichung | Mitglied(er) der Patentfamilie | Datum der Veröffentlichung |
|---|---|---|---|
| WO 9931951 A | 01-07-1999 | AT 227080 T | 15-11-2002 |
| | | AU 753485 B2 | 17-10-2002 |
| | | AU 1968499 A | 12-07-1999 |
| | | BR 9813664 A | 19-12-2000 |
| | | CA 2313333 A1 | 01-07-1999 |
| | | CN 1282215 A | 31-01-2001 |
| | | CZ 20002224 A3 | 14-03-2001 |
| | | DK 1039805 T3 | 25-11-2002 |
| | | EA 4958 B1 | 28-10-2004 |
| | | EP 1039805 A2 | 04-10-2000 |
| | | ES 2187077 T3 | 16-05-2003 |
| | | HU 0100935 A2 | 28-08-2001 |
| | | JP 2001526185 T | 18-12-2001 |
| | | NL 350020 I2 | 01-11-2004 |
| | | NZ 505624 A | 30-06-2003 |
| | | PL 341738 A1 | 07-05-2001 |
| | | PT 1039805 T | 28-02-2003 |
| | | SK 8182000 A3 | 12-03-2001 |
| | | TW 433980 B | 16-05-2001 |
| | | UA 65600 C2 | 15-12-2000 |
| | | US 6407126 B1 | 18-06-2002 |
| | | ZA 9811561 A | 19-06-2000 |
| WO 9931976 A | 01-07-1999 | AT 305219 T | 15-10-2005 |
| | | AT 225602 T | 15-10-2002 |
| | | AU 754335 B2 | 14-11-2002 |
| | | AU 2054099 A | 12-07-1999 |
| | | BR 9813669 A | 12-12-2000 |
| | | CA 2312993 A1 | 01-07-1999 |
| | | CN 1282213 A | 31-01-2001 |
| | | CZ 20002251 A3 | 14-03-2001 |
| | | DE 59813084 D1 | 03-11-2005 |
| | | DK 1201128 T3 | 30-01-2006 |
| | | DK 1039800 T3 | 28-10-2002 |
| | | EA 2904 B1 | 31-10-2002 |
| | | EP 1039800 A2 | 04-10-2000 |
| | | ES 2249377 T3 | 01-04-2006 |
| | | ES 2185246 T3 | 16-04-2003 |
| | | HU 0101132 A2 | 28-08-2001 |
| | | JP 2001526186 T | 18-12-2001 |
| | | NZ 505546 A | 30-05-2003 |
| | | PL 341813 A1 | 07-05-2001 |
| | | PT 1201128 T | 30-11-2005 |
| | | PT 1039800 T | 28-02-2003 |
| | | SK 8112000 A3 | 11-12-2000 |
| | | UA 65599 C2 | 15-12-2000 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT ÜBER DIE EUROPÄISCHE PATENTANMELDUNG NR.** EP 06 10 0901

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-07-2006

| Im Recherchenbericht angeführtes Patentdokument | Datum der Veröffentlichung | Mitglied(er) der Patentfamilie | Datum der Veröffentlichung |
|---|---|---|---|
| WO 9931976 A | | US 6436934 B1 | 20-08-2002 |
| | | ZA 9811560 A | 19-06-2000 |
| WO 9931979 A | 01-07-1999 | AT 246876 T | 15-08-2003 |
| | | AU 750310 B2 | 18-07-2002 |
| | | AU 2273199 A | 12-07-1999 |
| | | BR 9813573 A | 10-10-2000 |
| | | CA 2313479 A1 | 01-07-1999 |
| | | CN 1282207 A | 31-01-2001 |
| | | CZ 20002228 A3 | 15-11-2000 |
| | | DK 1047300 T3 | 08-12-2003 |
| | | EA 3136 B1 | 27-02-2003 |
| | | EP 1047300 A1 | 02-11-2000 |
| | | ES 2204005 T3 | 16-04-2004 |
| | | HU 0100732 A2 | 28-06-2001 |
| | | JP 2001526187 T | 18-12-2001 |
| | | NL 350026 I1 | 03-04-2006 |
| | | NZ 505597 A | 30-06-2003 |
| | | PL 341317 A1 | 09-04-2001 |
| | | PT 1047300 T | 31-12-2003 |
| | | SK 8142000 A3 | 18-01-2001 |
| | | TW 431861 B | 01-05-2001 |
| | | UA 65601 C2 | 15-11-2000 |
| | | US 6350765 B1 | 26-02-2002 |
| | | ZA 9811557 A | 19-06-2000 |
| WO 9931981 A | 01-07-1999 | AT 292384 T | 15-04-2005 |
| | | AT 222695 T | 15-09-2002 |
| | | AU 754336 B2 | 14-11-2002 |
| | | AU 2413999 A | 12-07-1999 |
| | | BR 9813681 A | 10-10-2000 |
| | | CA 2313322 A1 | 01-07-1999 |
| | | CN 1282208 A | 31-01-2001 |
| | | CZ 20002225 A3 | 13-12-2000 |
| | | DK 1039803 T3 | 14-10-2002 |
| | | EA 3284 B1 | 24-04-2003 |
| | | EP 1039803 A2 | 04-10-2000 |
| | | ES 2239645 T3 | 01-10-2005 |
| | | ES 2183441 T3 | 16-03-2003 |
| | | HU 0100717 A2 | 28-06-2001 |
| | | JP 2001526189 T | 18-12-2001 |
| | | NZ 505625 A | 29-04-2003 |
| | | PL 342400 A1 | 04-06-2001 |
| | | PT 1201126 T | 31-08-2005 |
| | | PT 1039803 T | 31-01-2003 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT ÜBER DIE EUROPÄISCHE PATENTANMELDUNG NR.** EP 06 10 0901

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-07-2006

| Im Recherchenbericht angeführtes Patentdokument | Datum der Veröffentlichung | Mitglied(er) der Patentfamilie | Datum der Veröffentlichung |
|---|---|---|---|
| | | SK 8132000 A3 | 12-03-2001 |
| WO 9931981 A | | TW 450787 B | 21-08-2001 |
| | | UA 68368 C2 | 15-12-2000 |
| | | US 6365608 B1 | 02-04-2002 |
| | | ZA 9811555 A | 19-06-2000 |
| WO 9931983 A | 01-07-1999 | AT 223153 T | 15-09-2002 |
| | | AU 750991 B2 | 08-08-2002 |
| | | AU 2273299 A | 12-07-1999 |
| | | BR 9813682 A | 10-10-2000 |
| | | CA 2312994 A1 | 01-07-1999 |
| | | CN 1282214 A | 31-01-2001 |
| | | CZ 20002227 A3 | 15-11-2000 |
| | | DK 1039807 T3 | 14-10-2002 |
| | | EA 3390 B1 | 24-04-2003 |
| | | EP 1039807 A1 | 04-10-2000 |
| | | ES 2183439 T3 | 16-03-2003 |
| | | HU 0100064 A2 | 28-05-2001 |
| | | JP 2001526190 T | 18-12-2001 |
| | | NZ 505623 A | 28-02-2003 |
| | | PL 341310 A1 | 09-04-2001 |
| | | PT 1039807 T | 31-01-2003 |
| | | SK 8152000 A3 | 18-01-2001 |
| | | TW 491686 B | 21-06-2002 |
| | | US 6410572 B1 | 25-06-2002 |
| | | ZA 9811559 A | 19-06-2000 |
| WO 9931984 A | 01-07-1999 | AT 224642 T | 15-10-2002 |
| | | AU 753264 B2 | 10-10-2002 |
| | | AU 2413899 A | 12-07-1999 |
| | | BR 9813667 A | 10-10-2000 |
| | | CA 2313187 A1 | 01-07-1999 |
| | | CN 1282212 A | 31-01-2001 |
| | | CZ 20002250 A3 | 14-03-2001 |
| | | DK 1041884 T3 | 14-10-2002 |
| | | EA 3089 B1 | 26-12-2002 |
| | | EP 1041884 A1 | 11-10-2000 |
| | | ES 2184357 T3 | 01-04-2003 |
| | | HU 0004330 A2 | 28-04-2001 |
| | | JP 2001526191 T | 18-12-2001 |
| | | NZ 505548 A | 29-08-2003 |
| | | PL 341315 A1 | 09-04-2001 |
| | | PT 1041884 T | 28-02-2003 |
| | | SK 8102000 A3 | 07-11-2000 |
| | | TW 450788 B | 21-08-2001 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR. EP 06 10 0901

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-07-2006

| Im Recherchenbericht angeführtes Patentdokument | Datum der Veröffentlichung | Mitglied(er) der Patentfamilie | Datum der Veröffentlichung |
|---|---|---|---|
| | | UA 61983 C2 | 15-12-2000 |
| | | US 6569875 B1 | 27-05-2003 |
| WO 9931984 A | | ZA 9811558 A | 19-06-2000 |
| WO 9931985 A | 01-07-1999 | AT 239372 T | 15-05-2003 |
| | | AU 752930 B2 | 03-10-2002 |
| | | AU 1968599 A | 12-07-1999 |
| | | BR 9813665 A | 10-10-2000 |
| | | CA 2313323 A1 | 01-07-1999 |
| | | CN 1282210 A | 31-01-2001 |
| | | CZ 20002226 A3 | 15-08-2001 |
| | | DK 1039806 T3 | 18-08-2003 |
| | | EA 3135 B1 | 27-02-2003 |
| | | EP 1039806 A1 | 04-10-2000 |
| | | ES 2200404 T3 | 01-03-2004 |
| | | HU 0004342 A2 | 28-04-2001 |
| | | JP 2001526192 T | 18-12-2001 |
| | | NZ 505598 A | 28-03-2003 |
| | | PL 341341 A1 | 09-04-2001 |
| | | PT 1039806 T | 30-09-2003 |
| | | SK 8162000 A3 | 12-02-2001 |
| | | TW 482652 B | 11-04-2002 |
| | | UA 61984 C2 | 15-12-2000 |
| | | US 6372748 B1 | 16-04-2002 |
| | | ZA 9811492 A | 15-06-2000 |
| WO 9931986 A | 01-07-1999 | AT 223154 T | 15-09-2002 |
| | | AU 752772 B2 | 26-09-2002 |
| | | AU 2273399 A | 12-07-1999 |
| | | BR 9813678 A | 03-10-2000 |
| | | CA 2313332 A1 | 01-07-1999 |
| | | CN 1282209 A | 31-01-2001 |
| | | CZ 20002252 A3 | 14-03-2001 |
| | | DK 1041883 T3 | 14-10-2002 |
| | | EA 3395 B1 | 24-04-2003 |
| | | EP 1041883 A1 | 11-10-2000 |
| | | ES 2183440 T3 | 16-03-2003 |
| | | HU 0100618 A2 | 30-07-2001 |
| | | JP 2001526193 T | 18-12-2001 |
| | | NZ 505596 A | 28-02-2003 |
| | | PL 341340 A1 | 09-04-2001 |
| | | PT 1041883 T | 31-01-2003 |
| | | SK 8172000 A3 | 07-11-2000 |
| | | TW 448036 B | 01-08-2001 |
| | | US 6777411 B1 | 17-08-2004 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 06 10 0901

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-07-2006

| Im Recherchenbericht angeführtes Patentdokument | Datum der Veröffentlichung | Mitglied(er) der Patentfamilie | Datum der Veröffentlichung |
|---|---|---|---|
| | | ZA 9811491 A | 15-06-2000 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 545099 A
- EP 0589301 A
- WO 9909013 A
- WO 0534628 A
- DE 2903612
- GB 1500581 A
- GB 2058059 A
- DE 1198125 A
- DE 2752096 A
- EP 281842 A
- DE 1164152 A
- DD 151404 A
- EP 224339 A
- EP 310550 A
- DE 2324020
- US 4664696 A
- GB 2098607 A
- EP 196038 A
- EP 15756 A
- EP 267778 A
- GB 857383 A
- BE 835579
- US 3991071 A
- WO 9616048 A
- EP 40345 A
- EP 234242 A
- BE 793867
- DE 2324010 A
- JP 54119462 A
- FR 2641277
- GB 1312536 A
- US 3903090 A
- DE 2207576 A
- US 1972961 A
- US 2317765 A
- US 2504404 A
- GB 996264 A
- US 2791605 A
- US 3248400 A
- BE 611960
- DE 642532 A
- US 2457674 A
- US 2720480 A
- US 3631176 A
- US 3657443 A
- US 3249499 A
- US 3399214 A
- GB 1218623 A
- DE 1209799 A
- JP 1104514 A
- US 3937840 A
- WO 9942447 A
- WO 9748684 A
- EP 49854 A
- GB 13943373 A
- US 5240940 A
- US 3017415 A
- DE 1930540 A
- DE 1901421 A
- WO 9846607 A
- US 2526660 A
- JP 9323984 A
- US 3290353 A
- WO 9619442 A
- US 3957847 A
- US 4052395 A
- EP 78663 A
- DE 1493736 A
- EP 639574 A
- US 3499086 A
- EP 262393 A
- FR 2254276
- EP 472996 A
- WO 03042166 A
- US 5945567 A
- DE 2732257 A
- JP 10130268 A
- DE 1567169 A
- DE 1643347 A
- GB 1467561 A
- DE 682048 A
- US 2553770 A
- DE 1193498 A
- EP 120321 A
- EP 860438 A
- WO 0366610 A
- WO 9924413 A
- WO 0449804 A
- EP 1035122 A
- WO 0314103 A
- EP 1031571 A
- EP 1201648 A
- EP 1028125 A
- EP 382375 A
- EP 477631 A
- WO 9727189 A
- EP 253213 A
- EP 398692 A

- WO 9715552 A
- EP 278595 A
- WO 9601256 A
- EP 460575 A
- EP 226917 A
- WO 9846608 A
- WO 04049804 A
- WO 0366609 A
- WO 03053145 A

**In der Beschreibung aufgeführte Nicht-Patentliteratur**

- *Plant Dis. Rep.,* 1957, vol. 41, 1029
- *Congr. Plant Pathol.,* 1968, vol. 1, 27
- *J. Am. Chem. Soc.,* 1947, vol. 69, 1234
- *Proc. 1990 Br. Crop. Prot. Conf. - Pests Dis.,* vol. 1, 459
- *Noyaku Kagaku,* 1983, vol. 8, 575
- *Fruits,* 1973, vol. 28, 545
- *Proc. 1988 Br. Crop Prot. Conf. - Pests Dis.,* vol. 1, 33
- *Proc. Br. Crop Prot. Conf.-Pests Dis.,* 1992, vol. 5-3, 411
- *Proc. Br. Crop Prot. Conf.-Pests Dis.,* 1984, vol. 1, 413
- Pesticide Manual. 2000, vol. 12, 712
- *Bull. Soc. Chim. Fr.,* vol. 15, 891
- *Proc. Insectic. Fungic. Conf.,* 1975, vol. 2, 715
- *Agric. Biol. Chem.,* 1973, vol. 37, 737
- *Proc. Br. Insectic. Fungic. Conf.,* vol. 2
- *Proc. 1988 Br. Crop Prot. Conf. - Pests Dis.,* vol. 1, 65
- The Pesticide Manual. The British Crop Protection Council, 1995, 482
- *Proc. Br. Crop Prot. Conf. - Pests Dis.,* 1998, vol. 2, 327
- **THE PESTICIDE MANUAL.** The Pesticide Manual. The British Crop Protection Council, 1995, 474
- **C. R. SEANCES ACAD. AGRIC. FR.** *C. R. Seances Acad. Agric. Fr.,* 1945, vol. 31, 24
- *Phytopathology,* 1962, vol. 52, 754
- *AGROW Nr. 243,* 1995, vol. 22
- **COLBY, S. R.** Calculating synergistic and antagonistic responses of herbicide Combinations. *Weeds,* 1967, vol. 15, 20-22